(19) Europäisches Patentamt
European Patent Office
Office européen des brevets

(11) EP 4 651 228 A1

# (12) EUROPEAN PATENT APPLICATION
published in accordance with Art. 153(4) EPC

(43) Date of publication:
**19.11.2025 Bulletin 2025/47**

(21) Application number: **24741584.7**

(22) Date of filing: **12.01.2024**

(51) International Patent Classification (IPC):
***H01M 4/139*** *(2010.01)* ***H01M 4/62*** *(2006.01)*

(52) Cooperative Patent Classification (CPC):
**H01M 4/139; H01M 4/62;** Y02E 60/10

(86) International application number:
**PCT/JP2024/000558**

(87) International publication number:
**WO 2024/150812 (18.07.2024 Gazette 2024/29)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.01.2023 JP 2023003534**
**09.05.2023 PCT/JP2023/017367**
**15.06.2023 PCT/JP2023/022271**
**29.09.2023 PCT/JP2023/035576**

(71) Applicant: **Nissan Chemical Corporation**
**Tokyo 103-6119 (JP)**

(72) Inventors:
- **HATANAKA Tatsuya**
**Funabashi-shi, Chiba 274-0052 (JP)**
- **IKEDA Takumi**
**Funabashi-shi, Chiba 274-0052 (JP)**
- **SAKAIDA Yasushi**
**Funabashi-shi, Chiba 274-0052 (JP)**
- **OTA Hirofumi**
**Funabashi-shi, Chiba 274-0052 (JP)**

(74) Representative: **Müller-Boré & Partner Patentanwälte PartG mbB**
**Friedenheimer Brücke 21**
**80639 München (DE)**

## (54) COMPOSITION FOR ELECTRODE FORMATION, ADDITIVE, AND GELATION INHIBITOR

(57) Provided is a composition for electrode formation with which it is possible to suppress thickening and gelation, improve shelf life and increase the concentration of solid matter by a simple method. The composition for electrode formation contains a positive electrode active substance, a binder, a solvent, and a heterocyclic compound, where the heterocyclic compound has a nitrogen-containing 5-membered ring, does not have an oxygen atom in the 5-membered ring, and has a carbonyl structure on the 5-membered ring.

EP 4 651 228 A1

## Description

### TECHNICAL FIELD

The present invention relates to an electrode-forming composition, an additive and a gelation inhibitor.

### BACKGROUND ART

Lithium-ion secondary batteries, because of their high energy density per unit weight and volume, are contributing to reductions in the size and weight of built-in electronic devices. In recent years, with the accelerating adoption of electric cars in the drive toward automotive zero emissions, there is a desire for even lower battery resistance, longer life, higher capacity, better safety and lower cost.

Lithium-ion secondary batteries generally have a three-layer construction --positive electrode/separator/negative electrode-- that includes an electrolyte solution. The positive and negative electrodes are produced by coating a current collector with an electrode slurry prepared by mixing together, for example, an active material, a conductive material and a binder. The method most commonly used today for producing negative electrodes involves applying a negative electrode slurry onto copper foil as the current collector, and drying the applied slurry. The method most commonly used for producing positive electrodes involves preparing a positive electrode slurry using as the solvent an organic solvent such as N-methyl-2-pyrrolidone, and coating the slurry onto aluminum foil as the current collector.

Inorganic compounds such as alkali metal-containing transition metal oxides and transition metal chalcogens are known to be positive electrode active materials for lithium-ion secondary batteries capable of achieving a battery voltage of about 4 V. Of these, highly alkaline positive electrode active materials containing much nickel or manganese are used for the purpose of obtaining high-capacity lithium-ion secondary batteries.

For example, high-nickel positive electrode active materials such as $Li_xNiO_2$ have a high discharge capacity and are thus attractive positive electrode materials. However, the alkaline constituents LiOH, $Li_2O$, $LiHCO_3$ and $Li_2CO_3$ that form in proton exchange reactions of such high-nickel positive electrode active materials with starting material residues or moisture and in reactions with moisture or carbon dioxide in the air are present on the surface.

A problem that arises with the use of such a positive electrode active material is that the electrode slurry thickens or gels, gradually losing fluidity. When the electrode slurry loses fluidity, not only does it become difficult to obtain a uniform coating thickness, in some cases coating becomes impossible to carry out, resulting in a waste of material.

The chief cause of this is thought to be that, in the positive electrode production step, alkaline constituents present on the surface of the positive electrode active material promote, in the presence of a trace amount of moisture, dehydrofluorination reactions on fluorinated binders having a vinylidene fluoride structure, such as polyvinylidene fluoride (PVdF), that are used as the binder.

In addition, alkaline constituents increase the resistance of a battery by corroding the aluminum foil typically used as the positive electrode current-collecting foil. Also, there is a risk of the alkaline constituents reacting with the electrolyte solution within the battery, increasing the battery resistance and worsening the battery life.

Although such thickening and gelation can be suppressed by handling the starting materials and electrode slurry in a dry environment and controlling the moisture content, a large-scale facility is required for the series of mass-production operations from electrode slurry preparation to battery production. An additional problem is the increased cost and greater environmental impact resulting from the use of a large amount of electricity.

In order to resolve this problem, Patent Document 1 discloses art which suppresses electrode slurry gelation by carrying out the preparation of an electrode slurry (positive electrode material slurry) in such a way as not to exhibit strong alkalinity even when dispersed in water. However, in the method described in Patent Document 1, the preparation of an electrode slurry in such a way as not to exhibit strong alkalinity not only requires strict pH control, it also requires treatment which, in a single pass, disperses a positive electrode active material in water, removes the positive electrode active material from the dispersion by filtration and then dries it. This results in operational complexity and decreased yield. Moreover, there is also a possibility of such treatment triggering a decrease in the performance of the positive electrode active material itself.

Patent Document 2 reports art that uses a compound such as ultrahigh-molecular-weight (weight-average molecular weight of 2,200,000 or more) polyethylene oxide which interacts with water (e.g., hydrogen bonding), binding the water and thus suppressing reactions between the alkaline constituents of the positive electrode active material and water, which in turn suppresses thickening and gelation. However, with ultrahigh-molecular-weight polymers that have a strong thickening effect, uniform dissolution treatment in a solvent takes time and is costly, in addition to which handling is a challenge in that rendering the polymer into a high-concentration solution is difficult. Also, because the above-described ultrahigh-molecular-weight polymer has a high water-binding ability, there is a concern that the polymer itself may introduce water into the composition, and so rigorous control in preliminary drying to prevent this is essential.

Patent Documents 3 and 4 teach the addition of an organic acid or inorganic acid in order to suppress gelation of

the electrode slurry (positive electrode mixture slurry) at the positive electrode of a lithium-ion secondary battery. In Patent Document 3, maleic acid, citraconic acid and malonic acid are used in the positive electrode mixture. In Patent Document 4, acetic acid, phosphoric acid, sulfuric acid or the like is used in the electrode slurry (positive electrode paste). However, a large amount of addition is necessary to neutralize the alkali with acid. As a result, this may lead to a decrease in the energy density of the battery or an increase in the battery resistance. Another problem is that the acid corrodes the equipment used in electrode production. Furthermore, in this method, because the organic acid or inorganic acid has a high degree of acidity, a neutralization reaction with lithium ions in the active material ultimately arises, which may lead to degradation of the battery performance.

Patent Document 5 discloses a method which can prevent gelation and also suppress gas evolution by using fluorine gas to treat the positive electrode active material and fixing the remaining LiOH as LiF. However, fluorine gas is highly toxic and difficult to handle, in addition to which the LiF that forms as a by-product increases the internal resistance of the battery, resulting in a decrease in the battery capacity. The capacity decreases also due to corrosion of the positive electrode active material by fluorine gas. Another problem is that residual fluorine reacts with trace moisture present in the active material or the electrolyte solution, forming hydrogen fluoride, which readily leads to cycle degradation.

Patent Document 6 teaches that washing with a lithium salt-containing aqueous solution removes unreacted lithium hydroxide and impurities originating from the starting materials. However, the costs associated with the increased environmental impact of the wastewater generated during washing and with wastewater treatment pose a problem.

## PRIOR ART DOCUMENTS

## PATENT DOCUMENTS

Patent Document 1: JP-A 2000-90917

Patent Document 2: JP-A 2019-121471

Patent Document 3: JP-A H09-306502

Patent Document 4: JP-A H10-79244

Patent Document 5: JP-A 2006-286240

Patent Document 6: WO 2017/034001 A1


## SUMMARY OF INVENTION

## TECHNICAL PROBLEM

In light of such circumstances, an object of this invention is to provide an electrode-forming composition with which it is possible by a simple method to suppress thickening and gelation of an electrode slurry, improve shelf stability, increase the solids concentration and suppress battery deterioration. Further objects of the invention are to provide an additive and a gelation inhibitor for electrode slurries containing a positive electrode active material, a binder and a solvent.

## SOLUTION TO PROBLEM

The inventors have conducted intensive investigations in order to attain the foregoing objects. As a result, they have discovered that by adding a specific heterocycle-containing compound which has a nitrogen-containing five-membered ring and does not include an oxygen atom in the five-membered ring to an electrode slurry containing at least a positive electrode active material, a binder and a solvent, thickening and gelation of the composition can be suppressed, enabling the shelf stability to be increased. Moreover, in an electrode produced using the electrode-forming composition of the invention, deterioration within a battery that is caused by alkaline constituents is suppressed, enabling the battery properties to be increased.

Accordingly, the invention provides the following electrode-forming compositions, additives and gelation inhibitors.

1. An electrode-forming composition which includes a positive electrode active material, a binder, a solvent and a

heterocycle-containing compound,
wherein the heterocycle-containing compound has a nitrogen-containing five-membered ring, does not include an oxygen atom in the five-membered ring, and has a carbonyl structure on the five-membered ring.
2. The electrode-forming composition of 1 above, wherein the heterocycle-containing compound is adhered to the positive electrode active material.
3. The electrode-forming composition of 1 above, wherein the heterocycle-containing compound is an unfused nitrogen-containing five-membered-ring heterocyclic compound.
4. The electrode-forming composition of 1 above, wherein the carbonyl structure exhibits proton tautomerism.
5. The electrode-forming composition of 4 above, wherein the proton tautomerism is keto-enol tautomerism.
6. The electrode-forming composition of 1 above, wherein the heterocycle-containing compound is represented by either of formulas (3) and (4) below

[Chem. 1]

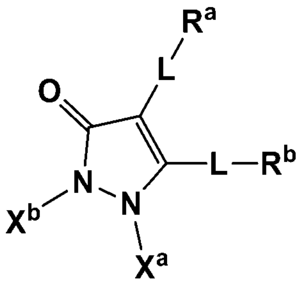
(3)

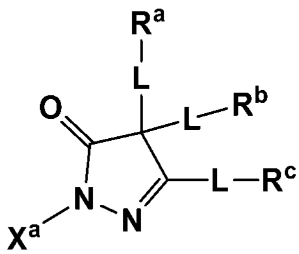
(4)

(wherein $R^a$ to $R^c$ are each independently a hydrogen atom, halogen atom, carboxyl group, hydroxyl group, thiol group, amino group, alkyl group of 1 to 6 carbon atoms which may have a substituent, alkenyl group of 2 to 6 carbon atoms which may have a substituent or aryl group of 6 to 12 carbon atoms which may have a substituent;

$R^a$ and $R^b$ may mutually bond to form a ring of 4 to 12 carbon atoms which may have a substituent;
each L is independently a single bond, carbonyl group, ether bond, ester bond or amide bond;
$X^a$ and $X^b$ are each independently a hydrogen atom, lithium atom, sodium atom, alkyl group of 1 to 6 carbon atoms which may have a substituent, aryl group of 6 to 12 carbon atoms which may have a substituent or $-CH_2NR^d{}_2$; and each $R^d$ is independently an alkyl group of 1 to 10 carbon atoms, alkanol group of 1 to 10 carbon atoms, alkenyl group of 2 to 10 carbon atoms or aryl group of 6 to 12 carbon atoms).

7. The electrode-forming composition of 1 above, wherein the substituents on $R^a$ to $R^c$, $X^a$ and $X^b$ are of at least one type selected from the group consisting of carboxyl, hydroxyl, aldehyde, ester, ketone, amino and phenyl groups, halogen atoms and alkoxysilyl, epoxy, carbonyl chloride and thiol groups.
8. The electrode-forming composition of 6 above, wherein the heterocycle-containing compound is represented by formula (4b) below

[Chem. 2]

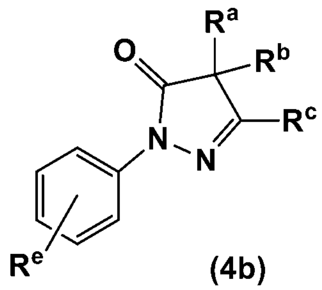

(4b)

(wherein $R^a$ to $R^c$ are the same as above; and
$R^e$ is a hydrogen atom, carboxyl group, hydroxyl group, aldehyde group, ester group, ketone group, amino group, phenyl group, halogen atom, alkoxysilyl group, epoxy group, carbonyl chloride group or thiol group).

9. The electrode-forming composition of 1 above, wherein the heterocycle-containing compound is a solid at normal temperature.

10. The electrode-forming composition of 1 above, further including a conductive additive.

11. The electrode-forming composition of 1 above, wherein the positive electrode active material contains at least 30 wt% nickel.

12. The electrode-forming composition of 1 above, wherein the positive electrode active material contains at least 40 wt% nickel.

13. The electrode-forming composition of 1 above, wherein the positive electrode active material contains at least 50 wt% nickel.

14. The electrode-forming composition of 1 above, further including a nonionic polymer.

15. The electrode-forming composition of 14 above, wherein the nonionic polymer is a polymer having pyrrolidone structures or nitrile groups.

16. The electrode-forming composition of 15 above, wherein the nonionic polymer is of at least one type selected from the group consisting of polyvinyl pyrrolidone and polyacrylonitrile.

17. The electrode-forming composition of 1 above, wherein the heterocycle-containing compound is included in an amount, based on solids in the composition, of from 0.001 to 0.5 wt%.

18. An electrode-forming composition which includes a positive electrode active material, a binder, a solvent and a heterocycle-containing compound,

wherein the heterocycle-containing compound is represented by either of formulas (1) and (2) below

[Chem. 3]

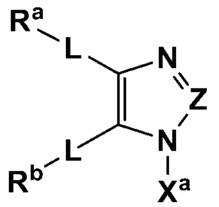

(1)

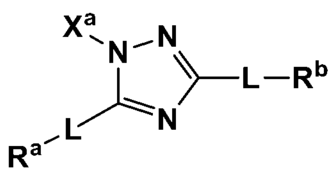

(2)

(wherein, in formula (1), $R^a$ and $R^b$ are each independently a hydrogen atom, carboxyl group, hydroxyl group, thiol group, alkyl group of 1 to 6 carbon atoms which may have a substituent, alkenyl group of 2 to 6 carbon atoms which may have a substituent or aryl group of 6 to 12 carbon atoms which may have a substituent;
$R^a$ and $R^b$ may mutually bond to form a ring of 4 to 12 carbon atoms which may have a substituent;
each L is independently a single bond, carbonyl group, ether bond, ester bond or amide bond;
Z is nitrogen or C-L-$R^c$;
$R^c$ is a hydrogen atom, halogen atom, carboxyl group, hydroxyl group, thiol group, alkyl group of 1 to 6 carbon

atoms which may have a substituent, alkenyl group of 2 to 6 carbon atoms which may have a substituent or aryl group of 6 to 12 carbon atoms which may have a substituent;

$X^a$ is a hydrogen atom, lithium atom, sodium atom, alkyl group of 1 to 6 carbon atoms which may have a substituent, aryl group of 6 to 12 carbon atoms which may have a substituent or $-CH_2NR^d{}_2$; and

each $R^d$ is independently an alkyl group of 1 to 10 carbon atoms, alkanol group of 1 to 10 carbon atoms, alkenyl group of 2 to 10 carbon atoms or aryl group of 6 to 12 carbon atoms; and

in formula (2), $R^a$ and $R^b$ are each independently a hydrogen atom, halogen atom, carboxyl group, hydroxyl group, thiol group, alkyl group of 1 to 6 carbon atoms which may have a substituent, alkenyl group of 2 to 6 carbon atoms which may have a substituent or aryl group of 6 to 12 carbon atoms which may have a substituent;

each L is independently a single bond, carbonyl group, ether bond, ester bond or amide bond;

$X^a$ is a hydrogen atom, lithium atom, sodium atom, alkyl group of 1 to 6 carbon atoms which may have a substituent, aryl group of 6 to 12 carbon atoms which may have a substituent or $-CH_2NR^d{}_2$; and

each $R^d$ is independently an alkyl group of 1 to 10 carbon atoms, alkanol group of 1 to 10 carbon atoms, alkenyl group of 2 to 10 carbon atoms or aryl group of 6 to 12 carbon atoms).

19. The electrode-forming composition of 18 above, wherein the heterocycle-containing compound is adhered to the positive electrode active material.

20. The electrode-forming composition of 18 above, wherein the substituents on $R^a$ to $R^c$, $X^a$ and $X^b$ are of at least one type selected from the group consisting of carboxyl, hydroxyl, aldehyde, ester, ketone and phenyl groups, halogen atoms and alkoxysilyl, epoxy, carbonyl chloride and thiol groups.

21. The electrode-forming composition of 18 above, wherein the heterocycle-containing compound is a heterocycle-containing compound of formula (5) below

[Chem. 4]

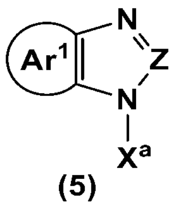

(5)

(wherein $Ar^1$ is an aromatic ring of 4 to 12 carbon atoms which may have a substituent or an aliphatic ring of 4 to 10 carbons which may have a substituent; and Z and $X^a$ are the same as above).

22. The electrode-forming composition of 21 above, wherein the heterocycle-containing compound is a heterocycle-containing compound of either of formulas (6) and (7) below

[Chem. 5]

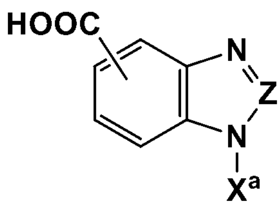

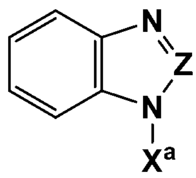

(6) (7)

(wherein Z and $X^a$ are the same as above).

23. The electrode-forming composition of 18 above, wherein Z is nitrogen.

24. The electrode-forming composition of 18 above, further including a conductive additive.

25. The electrode-forming composition of 18 above, wherein the positive electrode active material contains at least 30 wt% nickel.

26. The electrode-forming composition of 18 above, wherein the positive electrode active material contains at least 40

wt% nickel.

27. The electrode-forming composition of 18 above, wherein the positive electrode active material contains at least 50 wt% nickel.

28. The electrode-forming composition of 18 above, further including a nonionic polymer.

29. The electrode-forming composition of 28 above, wherein the nonionic polymer is a polymer having pyrrolidone structures or nitrile groups.

30. The electrode-forming composition of 29 above, wherein the nonionic polymer is of at least one type selected from the group consisting of polyvinyl pyrrolidone and polyacrylonitrile.

31. The electrode-forming composition of 18 above, wherein the heterocycle-containing compound is included in an amount, based on solids in the composition, of from 0.001 to 0.5 wt%.

32. An electrode layer obtained from the electrode-forming composition of any of 1 to 31 above.

33. An electrode which includes the electrode layer of 32 above.

34. A secondary battery which includes the electrode of 33 above.

35. A method of preparing the electrode-forming composition of 1 above, which method includes the steps of:

preparing a dispersion by mixing together a positive electrode active material, a binder and a solvent; and mixing together the dispersion and a heterocycle-containing compound.

36. The electrode-forming composition preparing method of 35 above, wherein a conductive additive is additionally mixed in the dispersion preparing step.

37. A method of preparing the electrode-forming composition of 18 above, which method includes the steps of:

preparing a dispersion by mixing together a positive electrode active material, a binder and a solvent; and mixing together the dispersion and a heterocycle-containing compound.

38. The electrode-forming composition preparing method of 37 above, wherein a conductive additive is additionally mixed in the dispersion preparing step.

39. An additive for an electrode slurry containing a positive electrode active material, a binder and a solvent, wherein the additive includes a heterocycle-containing compound which has a nitrogen-containing five-membered ring, does not include an oxygen atom in the five-membered ring, and has a carbonyl structure on the five-membered ring.

40. The additive of 39 above, wherein the heterocycle-containing compound is an unfused nitrogen-containing, five-membered-ring heterocyclic compound.

41. The additive of 39 above, wherein the carbonyl structure exhibits proton tautomerism.

42. The additive of 41 above, wherein the proton tautomerism is keto-enol tautomerism.

43. The additive of 39 above, wherein the heterocycle-containing compound is represented by either of formulas (3) and (4) below

[Chem. 6]

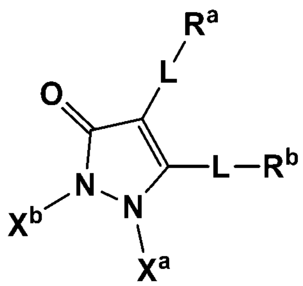

(3)

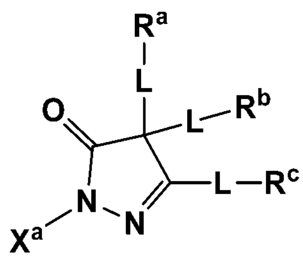

(4)

(wherein $R^a$ to $R^c$ are each independently a hydrogen atom, halogen atom, carboxyl group, hydroxyl group, thiol group, amino group, alkyl group of 1 to 6 carbon atoms which may have a substituent, alkenyl group of 2 to 6 carbon atoms which may have a substituent or aryl group of 6 to 12 carbon atoms which may have a substituent;

$R^a$ and $R^b$ may mutually bond to form a ring of 4 to 12 carbon atoms which may have a substituent; each L is independently a single bond, carbonyl group, ether bond, ester bond or amide bond; $X^a$ and $X^b$ are each independently a hydrogen atom, lithium atom, sodium atom, alkyl group of 1 to 6 carbon atoms which may have a substituent, aryl group of 6 to 12 carbon atoms which may have a substituent or $-CH_2NR^d{}_2$; and each $R^d$ is independently an alkyl group of 1 to 10 carbon atoms, alkanol group of 1 to 10 carbon atoms, alkenyl group of 2 to 10 carbon atoms or aryl group of 6 to 12 carbon atoms).

44. The additive of 43 above, wherein the substituents on $R^a$ to $R^c$, $X^a$ and $X^b$ are of at least one type selected from the group consisting of carboxyl, hydroxyl, aldehyde, ester, ketone, amino and phenyl groups, halogen atoms and alkoxysilyl, epoxy, carbonyl chloride and thiol groups.
45. The additive of 43 above, wherein the heterocycle-containing compound is represented by formula (4b) below

[Chem. 7]

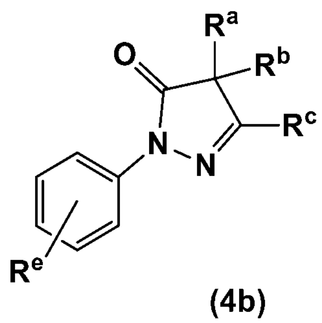

(4b)

(wherein $R^a$ to $R^c$ are the same as above; and
$R^e$ is a hydrogen atom, carboxyl group, hydroxyl group, aldehyde group, ester group, ketone group, amino group, phenyl group, halogen atom, alkoxysilyl group, epoxy group, carbonyl chloride group or thiol group).
46. The additive of 39 above, wherein the heterocycle-containing compound is a solid at normal temperature.
47. The additive of 39 above, wherein the positive electrode active material contains at least 30 wt% nickel.
48. The additive of 39 above, further containing a nonionic polymer.
49. The additive of 48 above, wherein the nonionic polymer is a polymer having pyrrolidone structures or nitrile groups.
50. The additive of 49 above, wherein the nonionic polymer is of at least one type selected from the group consisting of polyvinyl pyrrolidone and polyacrylonitrile.
51. The additive of 39 above, further containing a solvent.
52. An additive for an electrode slurry containing a positive electrode active material, a binder and a solvent,

wherein the additive includes a heterocycle-containing compound represented by either of formulas (1) and (2) below

[Chem. 8]

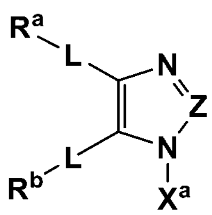

(1)

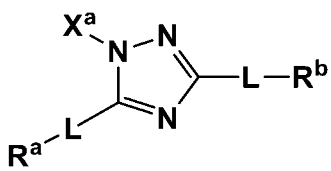

(2)

(wherein, in formula (1), $R^a$ and $R^b$ are each independently a hydrogen atom, carboxyl group, hydroxyl group, thiol group, alkyl group of 1 to 6 carbon atoms which may have a substituent, alkenyl group of 2 to 6 carbon atoms which may have a substituent or aryl group of 6 to 12 carbon atoms which may have a substituent;

$R^a$ and $R^b$ may mutually bond to form a ring of 4 to 12 carbon atoms which may have a substituent;
each L is independently a single bond, carbonyl group, ether bond, ester bond or amide bond;
Z is nitrogen or C-L-$R^c$;
$R^c$ is a hydrogen atom, halogen atom, carboxyl group, hydroxyl group, thiol group, alkyl group of 1 to 6 carbon atoms which may have a substituent, alkenyl group of 2 to 6 carbon atoms which may have a substituent or aryl group of 6 to 12 carbon atoms which may have a substituent;
$X^a$ is a hydrogen atom, lithium atom, sodium atom, alkyl group of 1 to 6 carbon atoms which may have a substituent, aryl group of 6 to 12 carbon atoms which may have a substituent or $-CH_2NR^d{}_2$; and
each $R^d$ is independently an alkyl group of 1 to 10 carbon atoms, alkanol group of 1 to 10 carbon atoms, alkenyl group of 2 to 10 carbon atoms or aryl group of 6 to 12 carbon atoms; and
in formula (2), $R^a$ and $R^b$ are each independently a hydrogen atom, halogen atom, carboxyl group, hydroxyl group, thiol group, alkyl group of 1 to 6 carbon atoms which may have a substituent, alkenyl group of 2 to 6 carbon atoms which may have a substituent or aryl group of 6 to 12 carbon atoms which may have a substituent;
each L is independently a single bond, carbonyl group, ether bond, ester bond or amide bond;
$X^a$ is a hydrogen atom, lithium atom, sodium atom, alkyl group of 1 to 6 carbon atoms which may have a substituent, aryl group of 6 to 12 carbon atoms which may have a substituent or $-CH_2NR^d{}_2$; and
each $R^d$ is independently an alkyl group of 1 to 10 carbon atoms, alkanol group of 1 to 10 carbon atoms, alkenyl group of 2 to 10 carbon atoms or aryl group of 6 to 12 carbon atoms).

53. The additive of 52 above, wherein the positive electrode active material contains at least 30 wt% nickel.
54. The additive of 52 above, further containing a nonionic polymer.
55. The additive of 54 above, wherein the nonionic polymer is a polymer having pyrrolidone structures or nitrile groups.
56. The additive of 55 above, wherein the nonionic polymer is of at least one type selected from the group consisting of polyvinyl pyrrolidone and polyacrylonitrile.
57. The additive of 52 above, further containing a solvent.
58. A gelation inhibitor for an electrode slurry containing a positive electrode active material, a binder and a solvent, wherein the gelation inhibitor includes a heterocycle-containing compound which has a nitrogen-containing five-membered ring and does not include an oxygen atom in the five-membered ring.
59. The gelation inhibitor of 58 above, wherein heteroatoms included in the nitrogen-containing five-membered ring are nitrogen atoms only.
60. The gelation inhibitor of 59 above, wherein two or three nitrogen atoms are included in the nitrogen-containing five-membered ring.
61. The gelation inhibitor of 58 above, wherein the heterocycle-containing compound has a carbonyl structure on the five-membered ring.
62. The gelation inhibitor of 61 above, wherein the heterocycle-containing compound is an unfused nitrogen-containing five-membered heterocyclic compound.
63. The gelation inhibitor of 61 above, wherein the carbonyl structure exhibits proton tautomerism.
64. The gelation inhibitor of 63 above, wherein the proton tautomerism is keto-enol tautomerism.
65. The gelation inhibitor of 58 above, wherein the heterocycle-containing compound is represented by either of formulas (3) and (4) below

[Chem. 9]

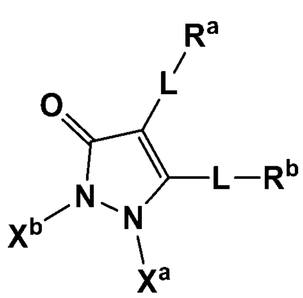

(3)

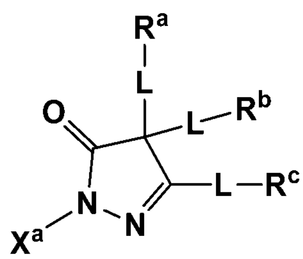

(4)

(wherein $R^a$ to $R^c$ are each independently a hydrogen atom, halogen atom, carboxyl group, hydroxyl group, thiol

group, amino group, alkyl group of 1 to 6 carbon atoms which may have a substituent, alkenyl group of 2 to 6 carbon atoms which may have a substituent or aryl group of 6 to 12 carbon atoms which may have a substituent;

$R^a$ and $R^b$ may mutually bond to form a ring of 4 to 12 carbon atoms which may have a substituent;
each L is independently a single bond, carbonyl group, ether bond, ester bond or amide bond;
$X^a$ and $X^b$ are each independently a hydrogen atom, lithium atom, sodium atom, alkyl group of 1 to 6 carbon atoms which may have a substituent, aryl group of 6 to 12 carbon atoms which may have a substituent or $-CH_2NR^d{}_2$; and each $R^d$ is independently an alkyl group of 1 to 10 carbon atoms, alkanol group of 1 to 10 carbon atoms, alkenyl group of 2 to 10 carbon atoms or aryl group of 6 to 12 carbon atoms).

66. The gelation inhibitor of 65 above, wherein the substituents on $R^a$ to $R^c$, $X^a$ and $X^b$ are of at least one type selected from the group consisting of carboxyl, hydroxyl, aldehyde, ester, ketone, amino and phenyl groups, halogen atoms and alkoxysilyl, epoxy, carbonyl chloride and thiol groups.
67. The gelation inhibitor of 65 above, wherein the heterocycle-containing compound is represented by formula (4b) below

[Chem. 10]

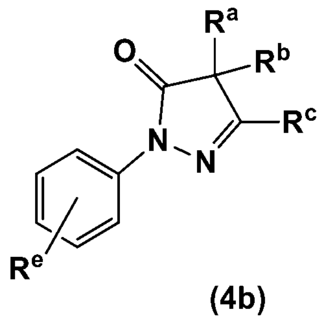

(4b)

(wherein $R^a$ to $R^c$ are the same as above; and
$R^e$ is a hydrogen atom, carboxyl group, hydroxyl group, aldehyde group, ester group, ketone group, amino group, phenyl group, halogen atom, alkoxysilyl group, epoxy group, carbonyl chloride group or thiol group).
68. The gelation inhibitor of 58 above, wherein the heterocycle-containing compound is a solid at normal temperature.
69. The gelation inhibitor of 58 above, wherein the positive electrode active material contains at least 30 wt% nickel.
70. The gelation inhibitor of 58 above, further containing a nonionic polymer.
71. The gelation inhibitor of 70 above, wherein the nonionic polymer is a polymer having pyrrolidone structures or nitrile groups.
72. The gelation inhibitor of 71 above, wherein the nonionic polymer is of at least one type selected from the group consisting of polyvinyl pyrrolidone and polyacrylonitrile.
73. The gelation inhibitor of 58 above, further containing a solvent.
74. A gelation inhibitor for an electrode slurry containing a positive electrode active material, a binder and a solvent,

wherein the gelation inhibitor includes a heterocycle-containing compound represented by either of formulas (1) and (2) below

[Chem. 11]

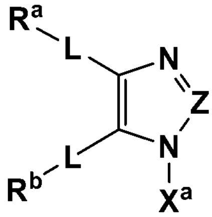

(1)

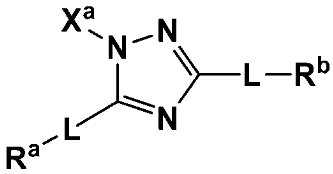

(2)

(wherein, in formula (1), $R^a$ and $R^b$ are each independently a hydrogen atom, carboxyl group, hydroxyl group, thiol group, alkyl group of 1 to 6 carbon atoms which may have a substituent, alkenyl group of 2 to 6 carbon atoms which may have a substituent or aryl group of 6 to 12 carbon atoms which may have a substituent;
$R^a$ and $R^b$ may mutually bond to form a ring of 4 to 12 carbon atoms which may have a substituent;
each L is independently a single bond, carbonyl group, ether bond, ester bond or amide bond;
Z is nitrogen or C-L-$R^c$;
$R^c$ is a hydrogen atom, halogen atom, carboxyl group, hydroxyl group, thiol group, alkyl group of 1 to 6 carbon atoms which may have a substituent, alkenyl group of 2 to 6 carbon atoms which may have a substituent or aryl group of 6 to 12 carbon atoms which may have a substituent;
$X^a$ is a hydrogen atom, lithium atom, sodium atom, alkyl group of 1 to 6 carbon atoms which may have a substituent, aryl group of 6 to 12 carbon atoms which may have a substituent or $-CH_2NR^d{}_2$; and
each $R^d$ is independently an alkyl group of 1 to 10 carbon atoms, alkanol group of 1 to 10 carbon atoms, alkenyl group of 2 to 10 carbon atoms or aryl group of 6 to 12 carbon atoms; and
in formula (2), $R^a$ and $R^b$ are each independently a hydrogen atom, halogen atom, carboxyl group, hydroxyl group, thiol group, alkyl group of 1 to 6 carbon atoms which may have a substituent, alkenyl group of 2 to 6 carbon atoms which may have a substituent or aryl group of 6 to 12 carbon atoms which may have a substituent;
each L is independently a single bond, carbonyl group, ether bond, ester bond or amide bond;
$X^a$ and $X^b$ are each independently a hydrogen atom, lithium atom, sodium atom, alkyl group of 1 to 6 carbon atoms which may have a substituent, aryl group of 6 to 12 carbon atoms which may have a substituent or $-CH_2NR^d{}_2$; and
each $R^d$ is independently an alkyl group of 1 to 10 carbon atoms, alkanol group of 1 to 10 carbon atoms, alkenyl group of 2 to 10 carbon atoms or aryl group of 6 to 12 carbon atoms).

75. The gelation inhibitor of 74 above, wherein the substituents on $R^a$ to $R^c$, $X^a$ and $X^b$ are of at least one type selected from the group consisting of carboxyl, hydroxyl, aldehyde, ester, ketone and phenyl groups, halogen atoms and alkoxysilyl, epoxy, carbonyl chloride and thiol groups.
76. The gelation inhibitor of 74 above, wherein the heterocycle-containing compound is a heterocycle-containing compound of formula (5) below

[Chem. 12]

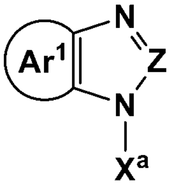

(5)

(wherein $Ar^1$ is an aromatic ring of 4 to 12 carbon atoms which may have a substituent or an aliphatic ring of 4 to 10 carbon atoms which may have a substituent; and Z and $X^a$ are the same as above).
77. The gelation inhibitor of 76 above, wherein the heterocycle-containing compound is a heterocycle-containing compound of either of formulas (6) and (7) below

[Chem. 13]

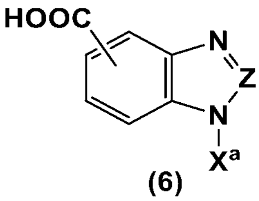
(6)

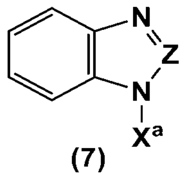
(7)

(wherein Z and $X^a$ are the same as above).

78. The gelation inhibitor of 74 above, wherein Z is nitrogen.
79. The gelation inhibitor of 74 above, wherein the positive electrode active material contains at least 30 wt% nickel.
80. The gelation inhibitor of 74 above, further containing a nonionic polymer.
81. The gelation inhibitor of 80 above, wherein the nonionic polymer is a polymer having pyrrolidone structures or nitrile groups.
82. The gelation inhibitor of 81 above, wherein the nonionic polymer is of at least one type selected from the group consisting of polyvinyl pyrrolidone and polyacrylonitrile.
83. The gelation inhibitor of 74 above, further containing a solvent.

ADVANTAGEOUS EFFECTS OF INVENTION

The electrode-forming composition of the invention is a composition which resists thickening and gelation and thus has a high shelf stability, and which can be suitably used to form a positive electrode for an energy storage device. When energy storage batteries equipped with an electrode produced using this composition are manufactured, anticipated advantages include enhanced quality and yield due to the increased shelf stability of the composition, cost reductions and reduced environmental impact due to a higher concentration of solids, and the suppression of deterioration within the battery caused by alkaline constituents. Such advantages can contribute to reductions in the manufacturing costs of energy storage devices and improvements in the battery characteristics.

In this invention, the above thickening and gelation inhibiting effect appears because, by adding a specific heterocycle-containing compound to an electrode slurry containing a positive electrode active material, a binder and a solvent, most of the heterocycle-containing compound is adhered to the positive electrode active material, forming a protective film on the surface of the positive electrode active material. This protective film suppresses proton exchange reactions between the active material and moisture, and suppresses reactions between alkaline constituents from the positive electrode active material and the binder, particularly a fluorinated binder. As a result, it is possible to inhibit thickening and gelation of the composition, enhancing the shelf stability.

It is known that when a positive electrode active material containing much nickel, such as a positive electrode active material containing at least 30 wt% of nickel, is used in an electrode slurry containing a positive electrode active material, a binder and a solvent, gelation of the electrode slurry readily arises. Gelation of the electrode slurry can be markedly suppressed by adding the additive or gelation inhibitor of the invention to the slurry.

By way of this invention, thickening and gelation of an electrode slurry is suppressed, making it possible to form a uniform positive electrode layer. In addition, it is also possible to increase the solids concentration in the electrode slurry, enabling the cost and environmental impact of manufacturing energy storage devices to be reduced. Furthermore, corrosion of the aluminum foil commonly used as the current-collecting foil owing to alkaline constituents, and deterioration of the battery characteristics due to reaction with the electrolyte solution can be suppressed. It is thus possible with this invention to obtain an electrode slurry gelation-suppressing effect without limitation as to the type of conductive additive or binder. However, the invention should not be construed as being limited to these mechanisms.

DESCRIPTION OF EMBODIMENTS

[Electrode-Forming Composition]

A feature of this invention is the fact that, when an additive containing a heterocycle-containing compound or a gelation inhibitor containing a heterocycle-containing compound is added to an electrode slurry containing a positive electrode active material, a binder and a solvent, most of the gelation inhibitor is adhered to the positive electrode active material. The terms "adhere" and "adhesion" as used herein are not limited as to the form of adhesion and, in addition to physical adsorption and chemical adsorption, may refer also to adhesion via chemical bonds such as ionic bonds or hydrogen bonds.

Embodiments of the invention in which at least 60 wt% of the additive containing a heterocycle-containing compound or the gelation inhibitor containing a heterocycle-containing compound that is included in the electrode-forming composition is adhered to the positive electrode active material are preferred, embodiments in which at least 70 wt% is adhered to the positive electrode active material are more preferred, embodiments in which at least 75 wt% is adhered to the positive electrode active material are still more preferred, and embodiments in which at least 80 wt% is adhered to the positive electrode active material are especially preferred.

In this invention, terms relating to the suppression or inhibition of gelation, such as "gelation suppression," mean that gelation of an electrode-forming composition is suppressed compared with when the additive or the gelation inhibitor of the invention is not included.

<Heterocycle-Containing Composition>

The electrode-forming composition of the invention includes a positive electrode active material, a binder, a solvent and a heterocycle-containing compound, which heterocycle-containing compound has a nitrogen-containing five-membered ring and does not include an oxygen atom in the five-membered ring.

The heterocycle-containing compound in the invention differs from the solvent in the invention, and is preferably a solid at normal temperature. In the invention, "solid at normal temperature" means that the melting point at one atmosphere is 25°C or higher.

"Does not include an oxygen atom in the five-membered ring" means that all five atoms making up the five-membered ring are not oxygen atoms.

"Has a carbonyl structure (carbonyl group) on the five-membered ring" means that at least one carbon atom of the five atoms making up the five-membered ring is bonded to an oxygen atom by a double bond.

By way of illustration, furan includes an oxygen atom on a five-membered ring and does not have a carbonyl structure (carbonyl group) on the ring.

Pyrazolone includes two nitrogen atoms in a five-membered ring, does not include an oxygen atom in the five-membered ring, and has a carbonyl structure (carbonyl group) on the ring.

Oxazoline includes one oxygen atom and one nitrogen atom in a five-membered ring, and does not have a carbonyl structure (carbonyl group) on the ring.

The heterocycle-containing compound is preferably one in which heteroatoms included in the nitrogen-containing five-membered ring are nitrogen atoms only, and more preferably one in which two or three nitrogen atoms are included in the nitrogen-containing five-membered ring.

Also, the heterocycle-containing compound is preferably one having a carbonyl structure (carbonyl group) on the nitrogen-containing five-membered ring, in which case the nitrogen-containing five-membered ring is more preferably not fused. One in which the carbonyl structure exhibits proton tautomerism is even more preferred, and one in which the carbonyl structure exhibits keto-enol tautomerism is still more preferred.

"Keto-enol tautomerism" means tautomerism between the keto form (ketone, aldehyde) and the enol form of the carbonyl structure.

In this invention, the heterocycle-containing compound is preferably not one which includes on the nitrogen-containing five-membered ring two or more bonds selected from the group consisting of amide bonds and sulfide bonds.

The heterocycle-containing compound preferably does not have a partial structural represented by the following formula

[Chem. 14]

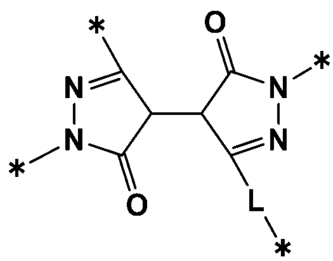

(wherein * represents an available bond).

Specific examples of the heterocycle-containing compound include those represented by any of formulas (1) to (4) below

[Chem. 15]

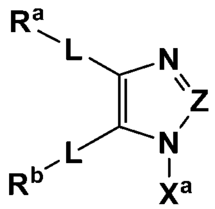

(1)

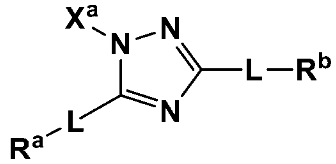

(2)

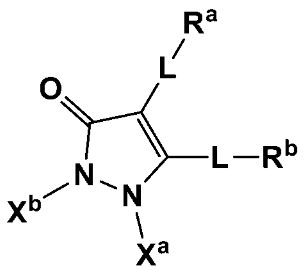

(3)

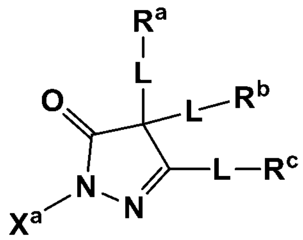

(4)

(wherein, in formula (1), $R^a$ and $R^b$ are each independently a hydrogen atom, carboxyl group, hydroxyl group, thiol group, amino group, alkyl group of 1 to 6 carbon atoms which may have a substituent, alkenyl group of 2 to 6 carbon atoms which may have a substituent or aryl group of 6 to 12 carbon atoms which may have a substituent;

$R^a$ and $R^b$ may mutually bond to form a ring of 4 to 12 carbon atoms which may have a substituent;
each L is independently a single bond, carbonyl group, ether bond, ester bond or amide bond;
Z is nitrogen or C-L-$R^c$;
$R^c$ is a hydrogen atom, halogen atom, carboxyl group, hydroxyl group, thiol group, amino group, alkyl group of 1 to 6 carbon atoms which may have a substituent, alkenyl group of 2 to 6 carbon atoms which may have a substituent or aryl group of 6 to 12 carbon atoms which may have a substituent;
$X^a$ is a hydrogen atom, lithium atom, sodium atom, alkyl group of 1 to 6 carbon atoms which may have a substituent, aryl group of 6 to 12 carbon atoms which may have a substituent or $-CH_2NR^d{}_2$; and
each $R^d$ is independently an alkyl group of 1 to 10 carbon atoms, alkanol group of 1 to 10 carbon atoms, alkenyl group of 2 to 10 carbon atoms or aryl group of 6 to 12 carbon atoms; and
in formulas (2) to (4), $R^a$ to $R^c$ are each independently a hydrogen atom, halogen atom, carboxyl group, hydroxyl group, thiol group, amino group, alkyl group of 1 to 6 carbon atoms which may have a substituent, alkenyl group of 2 to 6 carbon atoms which may have a substituent or aryl group of 6 to 12 carbon atoms which may have a substituent;
$R^a$ and $R^b$ may mutually bond to form a ring of 4 to 12 carbon atoms which may have a substituent;
each L is independently a single bond, carbonyl group, ether bond, ester bond or amide bond;
$X^a$ and $X^b$ are each independently a hydrogen atom, lithium atom, sodium atom, alkyl group of 1 to 6 carbon atoms which may have a substituent, aryl group of 6 to 12 carbon atoms which may have a substituent or $-CH_2NR^d{}_2$; and
each $R^d$ is independently an alkyl group of 1 to 10 carbon atoms, alkanol group of 1 to 10 carbon atoms, alkenyl group of 2 to 10 carbon atoms or aryl group of 6 to 12 carbon atoms).

Above formulas (2), (3) and (4) may be structural isomers. Specifically, isomers of the heterocycle-containing compounds of formula (2) are exemplified by heterocycle-containing compounds of formulas (2-A) to (2-C) below, isomers of the heterocycle-containing compounds of formula (3) are exemplified by heterocycle-containing compounds of formulas (3-A) to (3-E) below, and isomers of the heterocycle-containing compounds of formula (4) are exemplified by heterocycle-containing compounds of formulas (4-A) to (4-G) below.

In cases where $X^a$ and $X^b$ are each a hydrogen atom, a lithium atom or a sodium atom, of the above structural isomers, tautomers are preferred. When $X^a$ and $X^b$ are both hydrogen atoms, their tautomers are also called proton tautomers.

[Chem. 16]

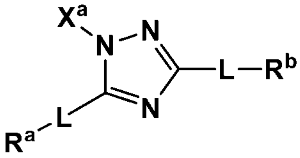
(2-A)

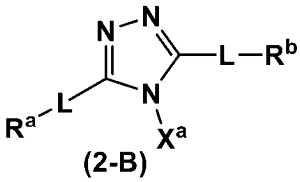
(2-B)

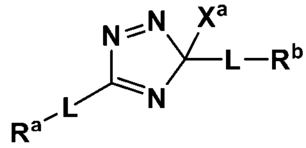
(2-C)

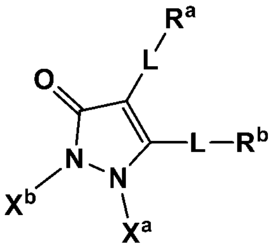
(3-A)

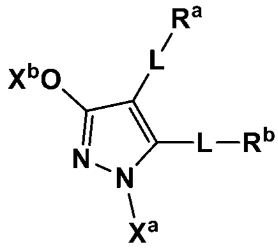
(3-B)

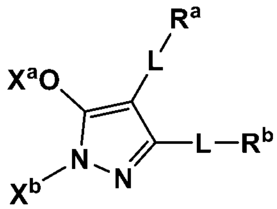
(3-C)

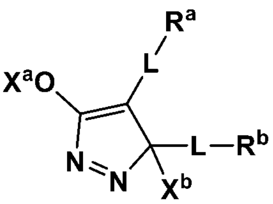
(3-D)

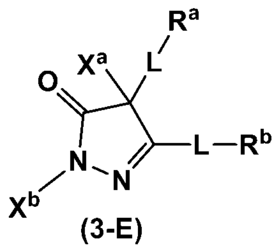
(3-E)

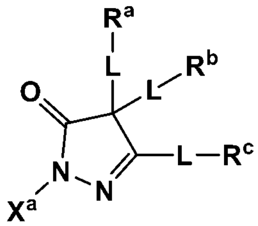
(4-A)

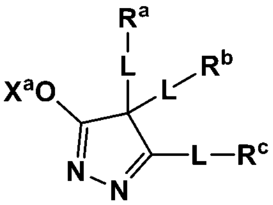
(4-B)

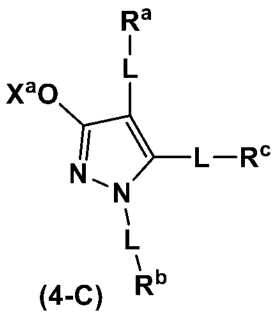
(4-C)

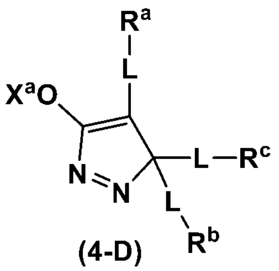
(4-D)

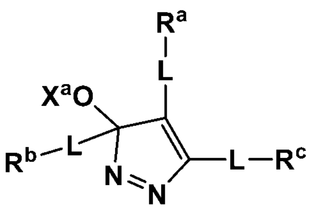
(4-E)

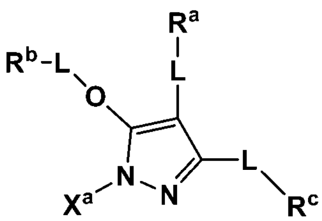
(4-F)

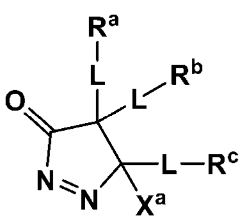
(4-G)

In these formulas, $R^a$ to $R^c$, L, $X^a$ and $X^b$ are the same as above.

The alkyl groups of 1 to 6 carbon atoms represented by $R^a$ to $R^c$ may be linear, branched or cyclic. Specific examples include linear or branched alkyl groups of 1 to 6 carbon atoms, such as methyl, ethyl, n-propyl, isopropyl, n-butyl, isobutyl, s-butyl, t-butyl, n-pentyl and n-hexyl groups; and cyclic alkyl groups of 3 to 6 carbon atoms, such as cyclopropyl, cyclobutyl, cyclopentyl and cyclohexyl groups.

Examples of the alkenyl groups of 2 to 6 carbon atoms represented by $R^a$ to $R^c$ include ethenyl, n-1-propenyl, n-2-propenyl, 1-methylethenyl, n-1-butenyl, n-2-butenyl, n-3-butenyl, 2-methyl-1-propenyl, 2-methyl-2-propenyl, 1-ethylethenyl, 1-methyl-1-propenyl, 1-methyl-2-propenyl and n-1-pentenyl groups.

Examples of the aryl groups of 6 to 12 carbon atoms represented by $R^a$ to $R^c$ include phenyl, tolyl, 1-naphthyl and 2-naphthyl groups.

Examples of the ring of 4 to 12 carbon atoms formed by the mutual bonding of $R^a$ and $R^b$ include cyclopentane, cyclohexane, benzene, naphthalene, triazole, pyridine and pyrazine rings.

$R^a$ to $R^c$ may have substituents. Examples of the substituents include carboxyl, hydroxyl, aldehyde, ester, ketone, amino and phenyl groups, halogen atoms and alkoxysilyl, epoxy, carbonyl chloride and thiol groups. Examples of the alkoxysilyl group include trimethoxysilyl, dimethoxymethylsilyl, methoxydimethylsilyl, triethoxysilyl, diethoxymethylsilyl and ethoxydimethylsilyl groups. In this invention, a carboxyl group is preferred. When $R^a$ to $R^c$ have substituents, the number of substituents is preferably from 1 to 6, and more preferably from 1 to 3.

It is preferable for $R^a$ to $R^c$ to be hydrogen atoms, carboxyl groups, alkyl groups of 1 to 6 carbon atoms which may have a substituent or aryl groups of 6 to 12 carbon atoms which may have a substituent, and for $R^a$ and $R^b$ to mutually bond to form a ring of 4 to 12 carbon atoms which may have a substituent.

It is more preferable for $R^a$ to $R^c$ to be hydrogen atoms, carboxyl groups, alkyl groups of 1 to 6 carbon atoms or aryl groups of 6 to 12 carbon atoms, and for $R^a$ and $R^b$ to mutually bond to form a ring of 4 to 12 carbon atoms which may have a substituent.

It is even more preferable for $R^a$ to $R^c$ to be hydrogen atoms, carboxyl groups, alkyl groups of 1 to 3 carbon atoms or aryl groups of 6 to 10 carbon atoms, and for $R^a$ and $R^b$ to mutually bond to form a ring of 6 to 10 carbon atoms which may have a substituent.

It is still more preferable for $R^a$ to $R^c$ to be hydrogen atoms, carboxyl groups, methyl groups or phenyl groups, and for $R^a$ and $R^b$ to mutually bond to form a benzene ring which may have a substituent.

L is preferably a single bond, an ester bond or an amide bond; a single bond is more preferred.

Z is preferably nitrogen.

The alkyl groups of 1 to 6 carbon atoms represented by $X^a$ and $X^b$ may be linear, branched or cyclic. Specific examples include linear or branched alkyl groups of 1 to 6 carbon atoms, such as methyl, ethyl, n-propyl, isopropyl, n-butyl, isobutyl, s-butyl, t-butyl, n-pentyl and n-hexyl groups; and cyclic alkyl groups of 3 to 6 carbon atoms, such as cyclopropyl, cyclobutyl, cyclopentyl and cyclohexyl groups.

Examples of the aryl groups of 6 to 12 carbon atoms represented by $X^a$ and $X^b$ include phenyl, tolyl, 1-naphthyl and 2-naphthyl groups.

$X^a$ and $X^b$ above may have substituents. Examples of the substituents include carboxyl, hydroxyl, aldehyde, ester, ketone, amino and phenyl groups, halogen atoms and alkoxysilyl, epoxy, carbonyl chloride and thiol groups. Examples of the alkoxysilyl group include trimethoxysilyl, dimethoxymethylsilyl, methoxydimethylsilyl, triethoxysilyl, diethoxymethylsilyl and ethoxydimethylsilyl groups. In this invention, carboxyl and alkoxysilyl groups are preferred; carboxyl and trimethoxysilyl groups are more preferred.

The alkyl group of 1 to 10 carbon atoms represented by $R^d$ may be linear, branched or cyclic. Specific examples include linear or branched alkyl groups of 1 to 10 carbon atoms, such as methyl, ethyl, n-propyl, isopropyl, cyclopropyl, n-butyl, isobutyl, s-butyl, t-butyl, n-pentyl, neopentyl, n-hexyl, n-octyl, n-nonyl and n-decyl groups; and cyclic alkyl groups of 3 to 10 carbon atoms, such as cyclopropyl, cyclobutyl, cyclopentyl, cyclohexyl and 1-adamantyl groups.

Examples of the alkanol group of 1 to 10 carbon atoms represented by $R^d$ include hydroxymethyl, hydroxyethyl, hydroxypropyl, hydroxybutyl, hydroxypentyl, hydroxyhexyl, hydroxyoctyl, hydroxynonyl and hydroxydecyl groups.

Examples of the alkenyl group of 2 to 10 carbon atoms represented by $R^d$ include ethenyl, n-1-propenyl, n-2-propenyl, 1-methylethenyl, n-1-butenyl, n-2-butenyl, n-3-butenyl, 2-methyl-1-propenyl, 2-methyl-2-propenyl, 1-ethylethenyl, 1-methyl-1-propenyl, 1-methyl-2-propenyl, n-1-pentenyl and n-1-decenyl groups.

Examples of the aryl group of 6 to 12 carbon atoms represented by $R^d$ include phenyl, tolyl, 1-naphthyl and 2-naphthyl groups.

$X^a$ and $X^b$ are preferably hydrogen atoms, lithium atoms, sodium atoms, alkyl groups of 1 to 6 carbon atoms which may have a substituent, aryl groups of 6 to 12 carbon atoms which may have a substituent or $-CH_2NR^d_2$.

$X^a$ and $X^b$ are more preferably hydrogen atoms, lithium atoms, sodium atoms, alkyl groups of 1 to 4 carbon atoms which may have a substituent, aryl groups of 6 to 10 carbon atoms which may have a substituent or $-CH_2NR^d_2$.

$X^a$ and $X^b$ are even more preferably hydrogen atoms, lithium atoms, sodium atoms, alkyl groups of 1 to 3 carbon atoms which may have a substituent, aryl groups of 6 to 8 carbon atoms which may have a substituent or $-CH_2NR^d_2$.

$X^a$ and $X^b$ are still more preferably hydrogen atoms, lithium atoms, sodium atoms, methyl groups, phenyl groups or $-CH_2NR^d_2$.

$R^d$ is preferably an alkyl group of 1 to 3 carbon atoms or an aryl group of 6 to 10 carbon atoms; methyl and phenyl groups are more preferred.

The heterocycle-containing compounds of formulas (1) to (4) are preferably heterocycle-containing compounds

of formulas (1a) to (4a) below.

[Chem. 17]

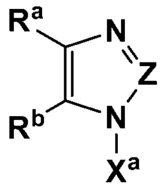

(1a)

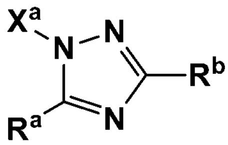

(2a)

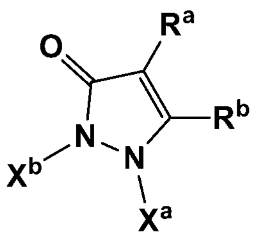

(3a)

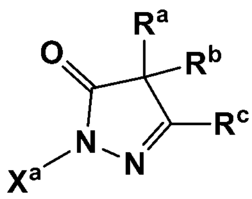

(4a)

In these formulas, $R^a$ to $R^c$, Z, $X^a$ and $X^b$ are the same as above.

In addition, the heterocycle-containing compound is more preferably a heterocycle-containing compound of formula (5) below.

[Chem. 18]

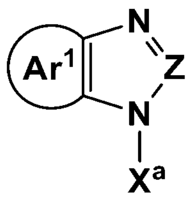

(5)

In this formula, $Ar^1$ is an aromatic ring of 4 to 12 carbon atoms which may have a substituent or an aliphatic ring of 4 to 10 carbon atoms which may have a substituent. Z and $X^a$ are the same as above.

The heterocycle-containing compound is even more preferably a heterocycle-containing compound of either of formulas (6) and (7) below.

[Chem. 19]

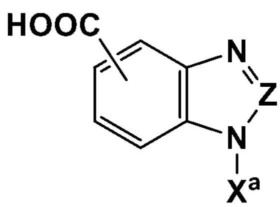

(6)

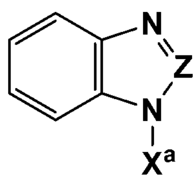

(7)

In these formulas, Z and $X^a$ are the same as above.

The above heterocycle-containing compound, in addition to heterocycle-containing compounds of formula (5) above, is more preferably a heterocycle-containing compound of formula (4b) below.

[Chem. 20]

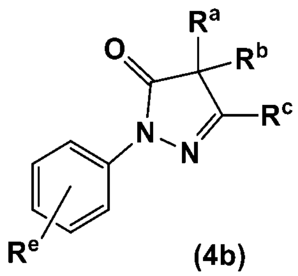

(4b)

In this formula, $R^a$ to $R^c$ are the same as above; and

$R^e$ is a hydrogen atom, carboxyl group, hydroxyl group, aldehyde group, ester group, ketone group, amino group, phenyl group, halogen atom, alkoxysilyl group, epoxy group, carbonyl chloride group or thiol group.

In formula (4b), cases in which $R^e$ is a hydrogen atom correspond to embodiments in which $X^a$ in formula (4) has no substituents. When $R^e$ is other than a hydrogen atom, this $R^e$ corresponds to a substituent on $X^a$ in formula (4), which substituent is the same as those mentioned in the description of the substituents on $X^a$ and $X^b$.

The above heterocycle-containing compound is more preferably a heterocycle-containing compound of formula (8) below

[Chem. 21]

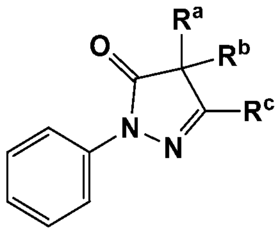

(8)

(wherein $R^a$ to $R^c$ are the same as above).

Specific examples of the heterocycle-containing compound of formula (1) include heterocycle-containing compounds of formulas (1-1) to (1-15) below.

[Chem. 22]

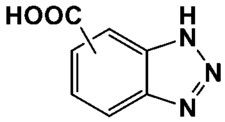
(1-1)

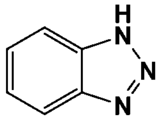
(1-2)

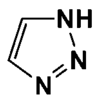
(1-3)

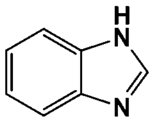
(1-4)

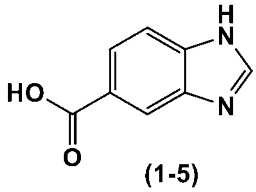
(1-5)

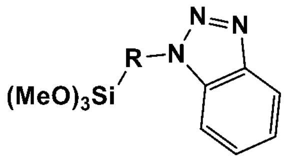
(1-6) *

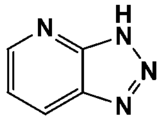
(1-7)

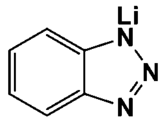
(1-8)

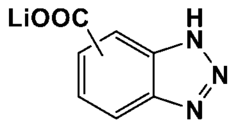
(1-9)

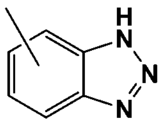
(1-10)

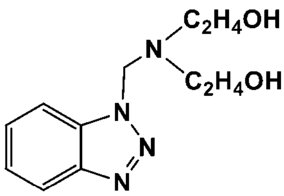
(1-11)

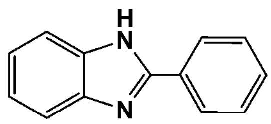
(1-12)

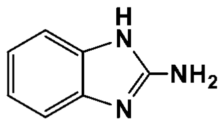
(1-13)

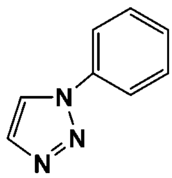
(1-14)

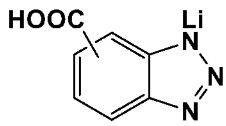
(1-15)

*The structure of the heterocycle-containing compound represented by formula (1-6) is the structure of the compound listed as X-12-1214A from Shin-Etsu Chemical Co., Ltd. in that company's catalog.

Specific examples of the heterocycle-containing compound of formula (2) above include the heterocycle-containing compounds of formulas (2-1) to (2-7) below.

[Chem. 23]

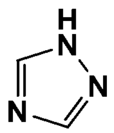

(2-1)

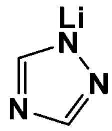

(2-2)

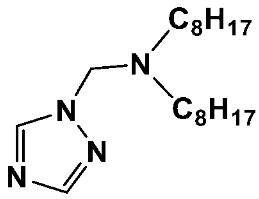

(2-3)

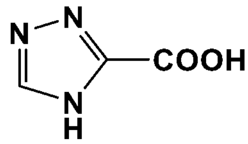

(2-4)

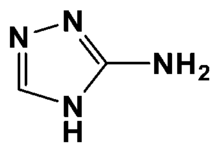

(2-5)

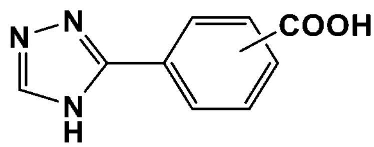

(2-6)

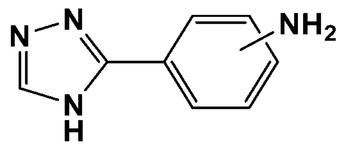

(2-7)

Specific examples of heterocycle-containing compounds of above formula (3) include the heterocycle-containing compounds of formulas (3-1) to (3-13) below.

[Chem. 24]

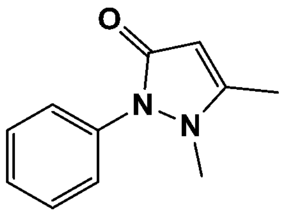

(3-1)

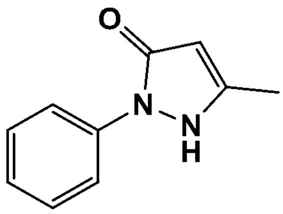

(3-2)

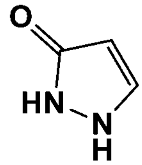

(3-3)

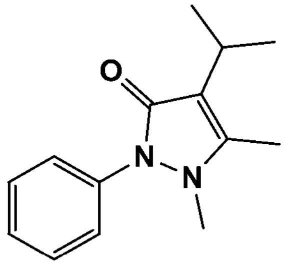

(3-4)

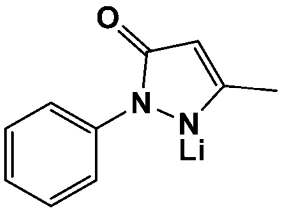

(3-5)

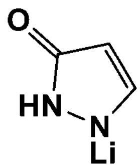

(3-6)

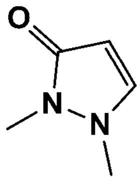

(3-7)

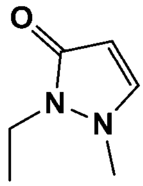

(3-8)

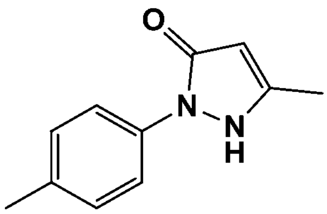

(3-9)

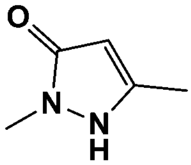

(3-10)

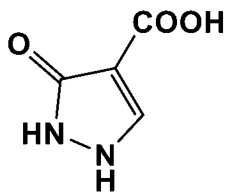

(3-11)

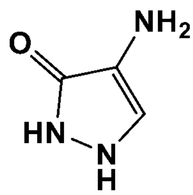

(3-12)

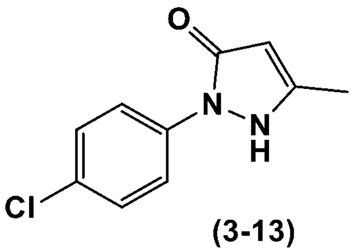

(3-13)

Specific examples of heterocycle-containing compounds of above formula (4) include the heterocycle-containing compounds of formulas (4-1) to (4-14) below.

[Chem. 25]

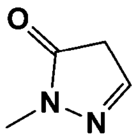

(4-1)

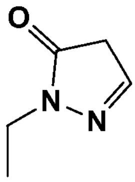

(4-2)

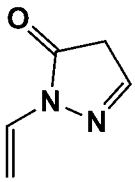

(4-3)

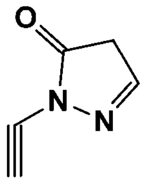

(4-4)

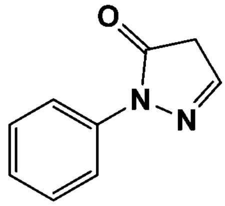

(4-5)

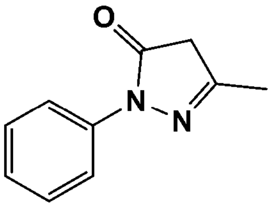

(4-6)

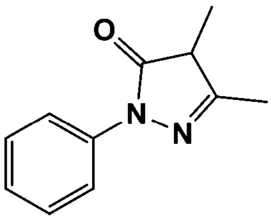

(4-7)

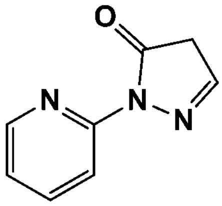

(4-8)

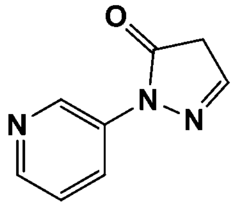

(4-9)

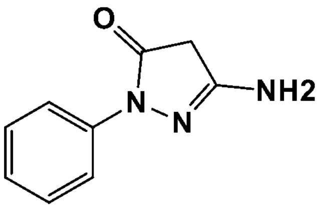

(4-10)

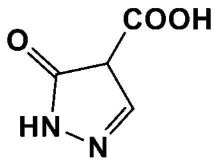

(4-11)

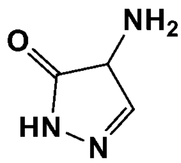

(4-12)

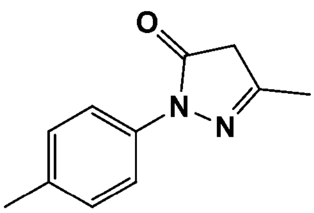

(4-13)

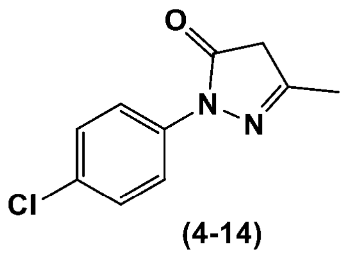

(4-14)

The content of the above heterocycle-containing compound is preferably from 0.001 to 4 wt%, more preferably from 0.001 to 2 wt%, even more preferably from 0.001 to 0.5 wt%, still more preferably from 0.001 to 0.3 wt%, and yet more preferably from 0.001 to 0.2 wt%, of the solids. The lower limit in the content of the heterocycle-containing compound is even more preferably 0.01 wt% of the solids. By setting the heterocycle-containing compound content within the above range, gelation of the electrode-forming composition can be effectively suppressed, enabling the battery characteristics of the resulting battery to be maintained. In this invention, "solids" refers to ingredients other than the solvent which make up the composition (the same applies below).

The content of the heterocycle-containing compound per 100 parts by weight of the positive electrode active material is preferably from 0.001 to 4 parts by weight, more preferably from 0.001 to 2 parts by weight, even more preferably from 0.001 to 0.5 part by weight, still more preferably from 0.001 to 0.3 part by weight, and yet more preferably from 0.001 to 0.2 part by weight. By setting the content of the heterocycle-containing compound within this range, gelation of the electrode-forming composition can be effectively suppressed, enabling the battery characteristics of the resulting battery to be maintained.

The content of the heterocycle-containing compound per 100 parts by weight of the binder is preferably from 0.1

to 50 parts by weight, more preferably from 0.1 to 30 parts by weight, and even more preferably from 0.1 to 20 parts by weight. By setting the content of the heterocycle-containing compound within this range, gelation of the electrode-forming composition can be effectively suppressed, enabling the battery characteristics of the resulting battery to be maintained.

<Positive Electrode Active Material>

A material which satisfies the above conditions may be suitably selected from various types of active materials conventionally used in electrodes for secondary batteries and other energy storage devices, and used here as the positive electrode active material. For example, in the case of lithium secondary batteries and lithium-ion secondary batteries, chalcogen compounds capable of adsorbing and releasing lithium ions, lithium ion-containing chalcogen compounds, polyanionic compounds, elemental sulfur and sulfur compounds may be used. To further increase the battery capacity and also from the standpoint of the limited amount of rare metals used and the low cost, a positive electrode active material containing at least 30 wt% of nickel is preferred. In this invention, to further reduce the amount of rare metals used and obtain a battery having an even larger capacity, a positive electrode active material containing 35 wt% or more of nickel is more preferred, one containing 40 wt% or more of nickel is even more preferred, one containing 50 wt% or more of nickel is still more preferred, and one containing 55 wt% or more of nickel is especially preferred. Although there is no particular upper limit, the amount of nickel included is generally 65 wt% or less.

Examples of lithium ion-containing chalcogen compounds include $LiNiO_2$, $Li_xNi_yM_{1-y}O_2$ (wherein M is one or more metal element selected from the group consisting of Co, Mn, Ti, Cr, V, Al, Sn, Pb and Zn; $0.05 \le x \le 1.10$ and $0.3 \le y \le 1.0$) and $Li_aNi_{(1-x-y)}Co_xM^1_yM^2_zO_2$ (wherein $M^1$ is one or more element selected from the group consisting of Mn and Al; $M^2$ is one or more element selected from the group consisting of Zr, Ti, Mg, B, Zr, W and V; $1.00 \le a \le 1.50$, $0.00 \le x \le 0.50$, $0 \le y \le 0.50$ and $0.000 \le z \le 0.020$).

Examples of polyanionic compounds include $LiFePO_4$, $Li_aMn_bFe_cD_dPO_4$ ($1.00 \le a \le 1.15$, $0.01 \le b \le 0.99$, $0.01 \le c \le 0.99$, $0.00 \le d \le 0.10$; D is selected from Co, Mn, Ti, Cr, V, Al, Sn, Pb and Zn; and at least a portion has an olivine structure).

Illustrative examples of sulfur compounds include sulfur, $Li_2S$, $FeS_2$, $TiS_2$, $MoS_2$ and rubeanic acid.

One of these active materials may be used alone or two or more may be used in combination.

In this invention, of the above positive electrode active materials, $Li_aNi_{(1-x-y)}Co_xM^1_yM^2_zX_wO_2$ (wherein $M^1$ is one or more element selected from the group consisting of Mn and Al; $M^2$ is one or more element selected from the group consisting of Zr, Ti, Mg, W and V; $1.00 \le a \le 1.50$, $0.00 \le x \le 0.50$, $0 \le y \le 0.50$, $0.000 \le z \le 0.020$ and $0.000 \le w \le 0.020$) is preferred. Of these active materials, one may be used alone or two or more may be used in combination.

The content of the positive electrode active material is preferably from 88.0 to 99.949 wt%, more preferably from 88.0 to 99.899 wt%, and even more preferably from 95.0 to 99.0 wt%, of the solids.

The binder may be suitably selected from among known materials and used, but is not particularly limited. Specific examples include fluorinated binders such as polyvinylidene fluoride (PVdF), polytetrafluoroethylene, and copolymers containing at least one monomer selected from the group consisting of vinylidene fluoride, tetrafluoroethylene and hexafluoropropylene; and nonaqueous binders such as polyimides, ethylene-propylene-diene terpolymers, styrene-butadiene rubber, polyethylene and polypropylene. In the invention, from the standpoint of enhancing the shelf stability of the composition, it is preferable to use a fluorinated binder. The fluorinated binder is preferably modified with polar functional groups such as carboxyl groups and hydroxyl groups. The polar functional groups can be confirmed by the presence or absence of distinct peaks detected in the range of 10 to 15 ppm in measurement with a nuclear magnetic resonance (NMR) spectrometer. The binder may be of one type used alone or two or more may be used in combination.

The binder has a weight-average molecular weight (Mw) which, from the standpoint of enhancing adhesion between the current collector and the electrode layer, is from 600,000 to 3,000,000, preferably from 700,000 to 2,000,000, and more preferably from 700,000 to 1,500,000.

The weight-average molecular weight is a polystyrene-equivalent value obtained by gel permeation chromatography (GPC).

The binder content, from the standpoint of holding down costs and obtaining a high energy density, is preferably from 0.05 to 8 wt%, more preferably from 0.05 to 5 wt%, even more preferably from 0.05 to 4 wt%, still more preferably from 0.1 to 3 wt%, yet more preferably from 0.2 to 2 wt%, and most preferably from 0.3 to 1.5 wt%, of the solids.

<Conductive Additive>

The electrode-forming composition of the invention may additionally include a conductive additive in order to further improve the electrical conductivity. Examples of the conductive additive include carbonaceous materials such as graphite, carbon black, acetylene black (AB), vapor phase-grown carbon fibers, carbon nanotubes (CNT), carbon nanohorns and graphene; and conductive polymers such as polyaniline, polypyrrole, polythiophene, polyacetylene and polyacene. From the standpoint of electrical conductivity and the ease of preparing the electrode-forming composition, it is preferable to not include graphene; the use of carbon black, acetylene black, vapor phase-grown carbon fibers,

carbon nanotubes or carbon nanohorns is preferred; the use of carbon black, acetylene black or carbon nanotubes is more preferred. The conductive additive may be of one type used alone or two or more may be used in combination. The use of carbon black or acetylene black together with carbon nanotubes is most preferred.

When the foregoing conductive additive is included, the content thereof, although not particularly limited, is preferably from 0.05 to 5 wt%, more preferably from 0.05 to 4 wt%, even more preferably from 0.1 to 3 wt%, and still more preferably from 0.2 to 2 wt%, of the solids. By setting the conductive additive content within the above range, a good electrical conductivity can be obtained.

<Other Ingredients>

The electrode-forming composition of the invention may additionally include other ingredients. For example, a dispersant may be included in order to enhance the dispersibility of the active material or the conductive additive. The dispersant may be suitably selected from substances which have hitherto been used as dispersants for conductive carbonaceous materials such as CNT, although from the standpoint of the stability within the battery including a nonionic polymer is preferred. Examples of the nonionic polymer include polyvinyl pyrrolidone (PVP) and polymers having at least one type of group selected from the group consisting of nitrile, hydroxyl, carbonyl, amino, sulfonyl and ether groups. Specific examples of such polymers include polyvinyl alcohol, polyacrylonitrile, polylactic acid, polyester, polyimide, polyphenyl ether, polyphenyl sulfone, polyethylene imine and polyaniline. In this invention, a polymer having pyrrolidone structures or nitrile groups is preferred; polyvinyl pyrrolidone and polyacrylonitrile are more preferred. The above dispersant may be of one type used alone or two or more may be used in combination.

The dispersant may be added at the same time as the additive or gelation inhibitor composed of a specific heterocycle-containing compound, or the additive or gelation inhibitor composed of a heterocycle-containing compound and the dispersant may be added independently.

With the addition of a nonionic polymer, one can expect an increase in the dispersibility of the active material or the conductive additive and also enhanced adhesion to the current-collecting foil.

When a dispersant is included, the content thereof, although not particularly limited, is preferably from 0.001 to 0.5 wt%, more preferably from 0.001 to 0.3 wt%, and even more preferably from 0.001 to 0.2 wt%, of the solids. The lower limit in the dispersant content is even more preferably 0.01 wt% of the solids.

Taking into account adhesion between the electrode layer obtained and the current collector, the overall amount of the heterocycle-containing compound and the dispersant is preferably from 0.001 to 1 wt%, and more preferably from 0.01 to 1 wt%, of the solids.

<Solvent>

The electrode-forming composition of the invention includes a solvent. No particular limitation is imposed on the solvent, so long as it is one that has been used to date in the preparation of electrode-forming compositions. Examples include water and the following organic solvents: ethers such as tetrahydrofuran (THF), diethyl ether and 1,2-dimethoxyethane (DME); halogenated hydrocarbons such as methylene chloride, chloroform and 1,2-dichloroethane; amides such as N,N-dimethylformamide (DMF), N,N-dimethylacetamide (DMAc) and N-methyl-2-pyrrolidone (NMP); ketones such as acetone, methyl ethyl ketone, methyl isobutyl ketone and cyclohexanone; alcohols such as methanol, ethanol, n-propanol, isopropanol, n-butanol and t-butanol; aliphatic hydrocarbons such as n-heptane, n-hexane and cyclohexane; aromatic hydrocarbons such as benzene, toluene, xylene and ethylbenzene; glycol ethers such as ethylene glycol monoethyl ether, ethylene glycol monobutyl ether and propylene glycol monomethyl ether; glycols such as ethylene glycol and propylene glycol; carbonates such as ethylene carbonate, propylene carbonate, dimethyl carbonate, diethyl carbonate and methyl ethyl carbonate; and also γ-butyrolactone, dimethylsulfoxide (DMSO), dioxolane and sulfolane. One of these solvents may be used alone or two or more may be used in combination.

The above-described binder may be used after being dissolved or dispersed in these solvents.

Examples of preferred solvents in this case include water, NMP, DMSO, ethylene carbonate, propylene carbonate, dimethyl carbonate, diethyl carbonate, methyl ethyl carbonate, γ-butyrolactone, THF, dioxolane, sulfolane, DMF and DMAc. The solvent may be suitably selected according to the type of binder. In the case of a water-insoluble binder such as PVdF, NMP is suitable; in the case of a water-soluble binder, water is suitable.

The solids concentration of the inventive electrode-forming composition, which is suitably set while taking into account, for example, the coating properties of the composition and the thickness of the electrode to be formed, is generally from about 60 wt% to about 92 wt%, preferably from about 65 wt% to 90 wt%, and more preferably from about 70 wt% to 85 wt%.

The viscosity of the electrode-forming composition of the invention, which is suitably set while taking into account, for example, the coating method and the thickness of the electrode to be formed, is generally from about 100 mPa·s to about 2,000,000 mPa·s, preferably from about 300 mPa·s to about 1,000,000 mPa·s, and more preferably from about 400

mPa·s to about 800,000 mPa·s. This viscosity is a value measured at 25°C with a type E viscometer.

The electrode-forming composition of the invention can be obtained by mixing together the above-described ingredients. When optional ingredients other than the additive (heterocycle-containing compound), positive electrode active material and binder of the invention are included, the additive and the positive electrode active material may be mixed together with the optional ingredients or the additive and the positive electrode active material may first be mixed together and the resulting mixture may then be mixed with the optional ingredients. The advantageous effects of the invention can be fully manifested with either approach.

[Method of Preparing Producing Electrode-Forming Composition]

The method of preparing the electrode-forming composition is exemplified by, but not limited to, a method that includes the steps of: preparing a dispersion by mixing together a positive electrode active material, a binder and a solvent; and mixing together the dispersion and a heterocycle-containing compound.

In cases where a conductive additive is used, it is preferably mixed in the above dispersion preparation step.

Here, the heterocycle-containing compound may be mixed in alone, or it may be mixed in as an additive obtained by combining the heterocycle-containing compound with at least one compound selected from the group consisting of polymers having pyrrolidone structures or nitrile groups, and solvents.

The polymers having pyrrolidone structures or nitrile groups are exemplified by the same compounds as mentioned above in the description of the dispersant. Polyvinyl pyrrolidone and polyacrylonitrile are preferred.

In cases where the above heterocycle-containing compound is mixed with a solvent, solvents that can be used are exemplified by the same compounds as mentioned above. Of these, NMP, propylene carbonate, ethylene carbonate, diethyl carbonate, dimethyl carbonate and ethyl methyl carbonate in particular can be preferably used in this invention.

[Electrode]

The electrode of the invention includes, on at least one side of a substrate serving as the current collector, an electrode layer made of the above-described electrode-forming composition.

The method of forming an electrode layer on a substrate is exemplified by a method in which a prepared electrode-forming composition is coated onto a substrate and the applied coat is dried. Various conventional known methods may be used without particular limitation as this method. Examples of coating processes include printing processes such as offset printing and screen printing, and also blade coating, dip coating, spin coating, bar coating, slit coating, inkjet coating and die coating.

During drying of the applied coat, either air drying or drying under applied heat may be used, although drying under applied heat is preferred from the standpoint of production efficiency. When drying under applied heat, the temperature is preferably between about 50°C and about 400°C, and more preferably between about 70°C and about 150°C.

Substrates that may be used in the electrode include metal substrates of, for example, platinum, gold, iron, stainless steel, copper, aluminum or lithium; alloy substrates obtained from any combination of these metals; oxide substrates such as indium tin oxide (ITO), indium zinc oxide (IZO) and antimony tin oxide (ATO); and carbon substrates such as glassy carbon, pyrolytic graphite and carbon felt. The substrate thickness in this invention, although not particularly limited, is preferably from 1 to 100 μm, more preferably from 3 to 30 μm, and most preferably from 5 to 25 μm.

The thickness of the electrode layer is not particularly limited, but is preferably from about 0.01 μm to about 1,000 μm, and more preferably from about 5 μm to about 300 μm. When the electrode layer is used alone as the electrode, the film thickness is preferably set to 10 μm or more.

If necessary, the electrode may be pressed. The pressing method used may be one that is commonly employed, with mold pressing and roll pressing being especially preferred. The pressure applied during pressing, although not particularly limited, is preferably 1 kN/cm or more, more preferably 2 kN/cm or more, and even more preferably 5 kN/cm or more. The applied pressure has no particular upper limit, but is preferably not more than 50 kN/cm.

[Secondary Battery]

The secondary battery of the invention is a secondary battery that includes the above-described electrode. More specifically, it is constructed of at least a pair of positive and negative electrodes, a separator situated between these electrodes, and an electrolyte, with the positive electrode serving as the above-described electrode. Other constituent members of battery cells may be suitably selected from among conventional known members and used.

The material used in the separator is exemplified by fiberglass, cellulose, porous polyolefin, polyamide and polyester.

The electrolyte may be either a liquid or a solid, and may be either aqueous or nonaqueous. From the standpoint

of being able to easily exhibit a satisfactory practical performance, preferred use can be made of an electrolyte solution composed of, for example, an electrolyte salt and a solvent.

Examples of the electrolyte salt include lithium salts such as $LiPF_6$, $LiBF_4$, $LiN(SO_2F)_2$, $LiN(C_2F_5SO_2)_2$, $LiAsF_6$, $LiSbF_6$, $LiAlF_4$, $LiGaF_4$, $LiInF_4$, $LiClO_4$, $LiN(CF_3SO_2)_2$, $LiCF_3SO_3$, $LiSiF_6$, $LiN(CF_3SO_2)$ and $(C_4F_9SO_2)$; metal iodides such as LiI, NaI, KI, CsI and $CaI_2$; iodide salts of quaternary imidazolinium compounds; iodide salts and perchlorate salts of tetraalkylammonium compounds; and metal bromides such as LiBr, NaBr, KBr, CsBr and $CaBr_2$. One of these electrolyte salts may be used alone or two or more may be used in combination.

The solvent is not particularly limited, so long as it is not one which gives rise to corrosion or decomposition of the substances making up the battery, leading to a deterioration in performance, and it dissolves the above electrolyte salt. For example, cyclic esters such as ethylene carbonate, propylene carbonate, butylene carbonate and γ-butyrolactone; ethers such as tetrahydrofuran and dimethoxyethane; acyclic esters such as methyl acetate, dimethyl carbonate, diethyl carbonate and ethyl methyl carbonate; and nitriles such as acetonitrile may be used as nonaqueous solvents. One of these solvents may be used alone or two or more may be used in combination.

Solid inorganic electrolytes such as solid sulfide electrolytes and solid oxide electrolytes, and solid organic electrolytes such as polymer electrolytes may be suitably used as solid electrolytes. By using these solid electrolytes, it is possible to obtain a completely solid battery that does not use an electrolyte solution.

Examples of the solid sulfide electrolytes include thiosilicon-based materials such as $Li_2S$-$SiS_2$-lithium compounds (wherein the lithium compound is at least one selected from the group consisting of $Li_3PO_4$, LiI and $Li_4SiO_4$), $Li_2S$-$P_2O_5$, $Li_2S$-$B_2S_5$ and $Li_2S$-$P_2S_5$-$GeS_2$.

Examples of the solid oxide electrolytes include $Li_5La_3M_2O_{12}$ (M = Nb, Ta) and $Li_7La_3Zr_2O_{12}$, which are oxides having a garnet structure, oxoacid salt compounds based on a γ-$Li_3PO_4$ structure which are generically referred to as LISICONs, perovskite, $Li_{3.3}PO_{3.8}N_{0.22}$ generically referred to as LIPONs, and sodium/alumina.

Examples of solid polymer electrolytes include polyethylene oxide materials and polymer compounds obtained by polymerizing or copolymerizing monomers such as hexafluoropropylene, tetrafluoroethylene, trifluoroethylene, ethylene, propylene, acrylonitrile, vinylidene chloride, acrylic acid, methacrylic acid, methyl acrylate, ethyl acrylate, methyl methacrylate, styrene and vinylidene fluoride. A supporting salt and a plasticizer may be included in these solid polymer electrolytes.

An example of the supporting salt included in the solid polymer electrolyte is lithium (fluorosulfonyl imide). An example of the plasticizer is succinonitrile.

Batteries manufactured using the electrode-forming composition of the invention contain less fluorinated binder than ordinary secondary batteries, yet have high battery characteristics.

The configuration of the secondary battery and the type of electrolyte are not particularly limited. Any battery configuration, such as a lithium-ion secondary battery, nickel-hydrogen battery, manganese battery or air battery, may be used, although a lithium-ion secondary battery is preferred. The lamination method and production method are not particularly limited.

When employed in a coin cell, the above-described electrode of the invention is typically die-cut in a predetermined disk shape and used. For example, a lithium-ion secondary battery may be produced by setting one electrode on a coin cell cap to which a washer and a spacer have been welded, laying an electrolyte solution-impregnated separator of the same shape on top thereof, laying the electrode of the invention on top of the separator with the electrode layer facing down, placing a coin cell case and gasket thereon, and sealing the assembly with a coin cell crimper.

[Additive]

The invention provides an additive for an electrode slurry containing a positive electrode active material, a binder and a solvent, which additive includes a heterocycle-containing compound which has a nitrogen-containing five-membered ring and does not include an oxygen atom in the five-membered ring. The additive can be suitably used as a gelation inhibitor for an electrode slurry containing a positive electrode active material, a binder and a solvent. In addition, this invention, by adding the above heterocycle-containing compound to an electrode slurry, can be suitably employed as a method for suppressing gelation of an electrode slurry.

The above heterocycle-containing compound is preferably a solid at normal temperature, which point was mentioned in the description of the electrode-forming composition.

The heterocycle-containing compound is preferably one in which heteroatoms included in the nitrogen-containing five-membered ring are nitrogen atoms only, and more preferably one in which two or three nitrogen atoms are included in the nitrogen-containing five-membered ring.

The heterocycle-containing compound is preferably one having a carbonyl structure (carbonyl group) on the nitrogen-containing five-membered ring. In this case, the nitrogen-containing five-membered ring is more preferably not fused. Moreover, the carbonyl structure even more preferably exhibits proton tautomerism, and still more preferably exhibits keto-enol tautomerism.

Specific examples of the heterocycle-containing compound include heterocycle-containing compounds represented by any of formulas (1) to (4) below

[Chem. 26]

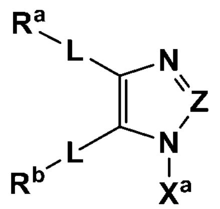

(1)

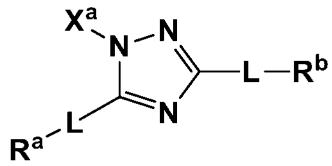

(2)

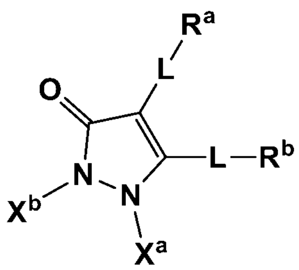

(3)

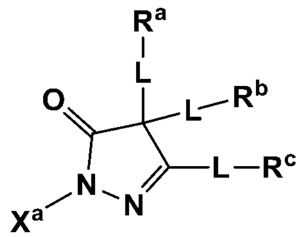

(4)

(wherein, in formula (1), $R^a$ and $R^b$ are each independently a hydrogen atom, carboxyl group, hydroxyl group, thiol group, alkyl group of 1 to 6 carbon atoms which may have a substituent, alkenyl group of 2 to 6 carbon atoms which may have a substituent or aryl group of 6 to 12 carbon atoms which may have a substituent;

$R^a$ and $R^b$ may mutually bond to form a ring of 4 to 12 carbon atoms which may have a substituent;
each L is independently a single bond, carbonyl group, ether bond, ester bond or amide bond;
Z is nitrogen or C-L-$R^c$;
$R^c$ is a hydrogen atom, halogen atom, carboxyl group, hydroxyl group, thiol group, alkyl group of 1 to 6 carbon atoms which may have a substituent, alkenyl group of 2 to 6 carbon atoms which may have a substituent or aryl group of 6 to 12 carbon atoms which may have a substituent;
$X^a$ is a hydrogen atom, lithium atom, sodium atom, alkyl group of 1 to 6 carbon atoms which may have a substituent, aryl group of 6 to 12 carbon atoms which may have a substituent or $-CH_2NR^d{}_2$; and
each $R^d$ is independently an alkyl group of 1 to 10 carbon atoms, alkanol group of 1 to 10 carbon atoms, alkenyl group of 2 to 10 carbon atoms or aryl group of 6 to 12 carbon atoms;
in formula (2), $R^a$ and $R^b$ are each independently a hydrogen atom, halogen atom, carboxyl group, hydroxyl group, thiol group, alkyl group of 1 to 6 carbon atoms which may have a substituent, alkenyl group of 2 to 6 carbon atoms which may have a substituent or aryl group of 6 to 12 carbon atoms which may have a substituent;
each L is independently a single bond, carbonyl group, ether bond, ester bond or amide bond;
$X^a$ is a hydrogen atom, lithium atom, sodium atom, alkyl group of 1 to 6 carbon atoms which may have a substituent, aryl group of 6 to 12 carbon atoms which may have a substituent or $-CH_2NR^d{}_2$; and
each $R^d$ is independently an alkyl group of 1 to 10 carbon atoms, alkanol group of 1 to 10 carbon atoms, alkenyl group of 2 to 10 carbon atoms or aryl group of 6 to 12 carbon atoms; and
in formulas (3) and (4), $R^a$ to $R^c$ are each independently a hydrogen atom, halogen atom, carboxyl group, hydroxyl group, thiol group, amino group, alkyl group of 1 to 6 carbon atoms which may have a substituent, alkenyl group of 2 to 6 carbon atoms which may have a substituent or aryl group of 6 to 12 carbon atoms which may have a substituent;
$R^a$ and $R^b$ may mutually bond to form a ring of 4 to 12 carbon atoms which may have a substituent;
each L is independently a single bond, carbonyl group, ether bond, ester bond or amide bond;
$X^a$ and $X^b$ are each independently a hydrogen atom, lithium atom, sodium atom, alkyl group of 1 to 6 carbon atoms which may have a substituent, aryl group of 6 to 12 carbon atoms which may have a substituent or $-CH_2NR^d{}_2$; and
each $R^d$ is independently an alkyl group of 1 to 10 carbon atoms, alkanol group of 1 to 10 carbon atoms, alkenyl group of 2 to 10 carbon atoms or aryl group of 6 to 12 carbon atoms).

In formulas (1) to (4), specific examples of $R^a$ to $R^c$, L, $X^a$, $X^b$ and $R^d$ include the same as those mentioned in the description of the electrode-forming composition.

The additive may additionally include a nonionic polymer.

The nonionic polymer is exemplified by the same compounds as those mentioned as examples of dispersants in the description of other ingredients in the electrode-forming composition, with polymers having pyrrolidone structures or nitrile groups being preferred, and polyvinyl pyrrolidone and polyacrylonitrile being more preferred.

When the above polymer is included in the additive, the content thereof, although not particularly limited, is preferably from 0.001 to 0.5 wt%, more preferably from 0.001 to 0.3 wt%, and even more preferably from 0.001 to 0.2 wt%, of the solids. The lower limit in the content of the polymer is even more preferably 0.01 wt% of the solids.

A solvent may also be included in the additive. The solvent is exemplified by the same compounds as mentioned in the description of the electrode-forming composition. In this invention, of such solvents, preferred use can be made of NMP, propylene carbonate, ethylene carbonate, diethyl carbonate, dimethyl carbonate and ethyl methyl carbonate.

In cases where a solvent is included in the above additive, the heterocycle-containing compound represented by any of formulas (1) to (4) is preferably one that is dissolved or dispersed in the solvent, and more preferably one that is dissolved in the solvent.

In cases where the additive of the invention includes a solvent, the solids concentration of the additive is suitably set while taking into consideration, for example, the saturation solubility in the solvent and the shelf stability, although the concentration is generally from about 1 wt% to about 60 wt%, preferably from about 3 wt% to about 55 wt%, and more preferably from about 3 wt% to about 50 wt%.

The positive electrode active material and the binder in the electrode slurry also are the same as those mentioned in the description of the electrode-forming composition.

[Gelation Inhibitor]

In addition, the invention provides a gelation inhibitor for an electrode slurry containing a positive electrode active material, a binder and a solvent, which gelation inhibitor includes a heterocycle-containing compound which has a nitrogen-containing five-membered ring and does not include an oxygen atom in the five-membered ring With the gelation inhibitor of the invention, gelation of an electrode slurry containing a positive electrode active material, a binder and a solvent can be more effectively suppressed.

The heterocycle-containing compound differs from the solvent in the invention in that it is a solid at normal temperature, which point was mentioned in the description of the electrode-forming composition.

The heterocycle-containing compound is preferably one in which heteroatoms included in the nitrogen-containing five-membered ring are nitrogen atoms only, and more preferably one in which two or three nitrogen atoms are included in the nitrogen-containing five-membered ring.

The heterocycle-containing compound is preferably one having a carbonyl structure (carbonyl group) on the nitrogen-containing five-membered ring. In this case, the nitrogen-containing five-membered ring is more preferably not fused. The carbonyl structure even more preferably exhibits proton tautomerism, and still more preferably exhibits keto-enol tautomerism.

Specific examples of the above heterocycle-containing compound include compounds represented by any of formulas (1) to (4) below

[Chem. 27]

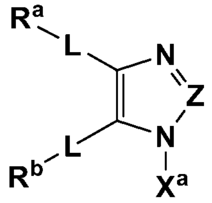

(1)

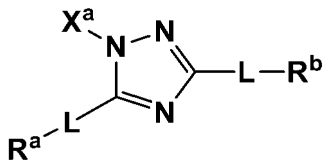

(2)

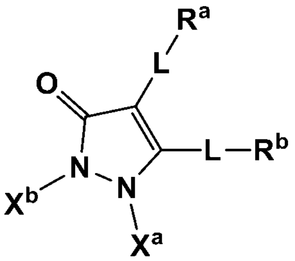

(3)

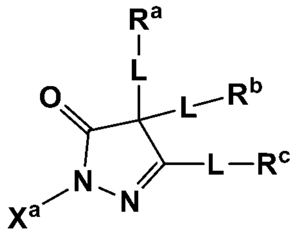

(4)

(wherein, in formula (1), $R^a$ and $R^b$ are each independently a hydrogen atom, carboxyl group, hydroxyl group, thiol group, alkyl group of 1 to 6 carbon atoms which may have a substituent, alkenyl group of 2 to 6 carbon atoms which may have a substituent or aryl group of 6 to 12 carbon atoms which may have a substituent;

$R^a$ and $R^b$ may mutually bond to form a ring of 4 to 12 carbon atoms which may have a substituent;
each L is independently a single bond, carbonyl group, ether bond, ester bond or amide bond;
Z is nitrogen or C-L-$R^c$;
$R^c$ is a hydrogen atom, halogen atom, carboxyl group, hydroxyl group, thiol group, alkyl group of 1 to 6 carbon atoms which may have a substituent, alkenyl group of 2 to 6 carbon atoms which may have a substituent or aryl group of 6 to 12 carbon atoms which may have a substituent;
$X^a$ is a hydrogen atom, lithium atom, sodium atom, alkyl group of 1 to 6 carbon atoms which may have a substituent, aryl group of 6 to 12 carbon atoms which may have a substituent or $-CH_2NR^d{}_2$; and
each $R^d$ is independently an alkyl group of 1 to 10 carbon atoms, alkanol group of 1 to 10 carbon atoms, alkenyl group of 2 to 10 carbon atoms or aryl group of 6 to 12 carbon atoms;
in formula (2), $R^a$ and $R^b$ are each independently a hydrogen atom, halogen atom, carboxyl group, hydroxyl group, thiol group, alkyl group of 1 to 6 carbon atoms which may have a substituent, alkenyl group of 2 to 6 carbon atoms which may have a substituent or aryl group of 6 to 12 carbon atoms which may have a substituent;
each L is independently a single bond, carbonyl group, ether bond, ester bond or amide bond;
$X^a$ is a hydrogen atom, lithium atom, sodium atom, alkyl group of 1 to 6 carbon atoms which may have a substituent, aryl group of 6 to 12 carbon atoms which may have a substituent or $-CH_2NR^d{}_2$; and
each $R^d$ is independently an alkyl group of 1 to 10 carbon atoms, alkanol group of 1 to 10 carbon atoms, alkenyl group of 2 to 10 carbon atoms or aryl group of 6 to 12 carbon atoms; and
in formulas (3) and (4), $R^a$ to $R^c$ are each independently a hydrogen atom, halogen atom, carboxyl group, hydroxyl group, thiol group, amino group, alkyl group of 1 to 6 carbon atoms which may have a substituent, alkenyl group of 2 to 6 carbon atoms which may have a substituent or aryl group of 6 to 12 carbon atoms which may have a substituent;
$R^a$ and $R^b$ may mutually bond to form a ring of 4 to 12 carbon atoms which may have a substituent;
each L is independently a single bond, carbonyl group, ether bond, ester bond or amide bond;
$X^a$ and $X^b$ are each independently a hydrogen atom, lithium atom, sodium atom, alkyl group of 1 to 6 carbon atoms which may have a substituent, aryl group of 6 to 12 carbon atoms which may have a substituent or $-CH_2NR^d{}_2$; and
each $R^d$ is independently an alkyl group of 1 to 10 carbon atoms, alkanol group of 1 to 10 carbon atoms, alkenyl group of 2 to 10 carbon atoms or aryl group of 6 to 12 carbon atoms).

In formulas (1) to (4), specific examples of $R^a$ to $R^c$, L, $X^a$, $X^b$ and $R^d$ include the same as those mentioned in the description of the electrode-forming composition.

The gel inhibitor may additionally include a nonionic polymer.

The nonionic polymer is exemplified by the same compounds as those mentioned as examples of dispersants in the description of other ingredients in the electrode-forming composition, with polymers having pyrrolidone structures or nitrile groups being preferred, and polyvinyl pyrrolidone and polyacrylonitrile being more preferred.

When the above polymer is included in the gelation inhibitor, the content thereof, although not particularly limited, is preferably from 0.001 to 0.5 wt%, more preferably from 0.001 to 0.3 wt%, and even more preferably from 0.001 to 0.2 wt%, of the solids. The lower limit in the content of the polymer is even more preferably 0.01 wt% of the solids.

A solvent may also be included in the additive. The solvent is exemplified by the same compounds as mentioned in the description of the electrode-forming composition. In this invention, of such solvents, preferred use can be made of NMP, propylene carbonate, ethylene carbonate, diethyl carbonate, dimethyl carbonate and ethyl methyl carbonate.

In cases where a solvent is included in the above gelation inhibitor, the heterocycle-containing compound represented by any of formulas (1) to (4) is preferably one that is dissolved or dispersed in the solvent, and more preferably one that is dissolved in the solvent.

In cases where the gelation inhibitor of the invention includes a solvent, the solids concentration of the gelation inhibitor is suitably set while taking into consideration, for example, the saturation solubility in the solvent and the shelf stability, although the concentration is generally from about 1 wt% to about 60 wt%, preferably from about 3 wt% to about 55 wt%, and more preferably from about 3 wt% to about 50 wt%.

The positive electrode active material and the binder in the electrode slurry also are the same as those mentioned in the description of the electrode-forming composition.

## EXAMPLES

Examples and Comparative Examples are given below to more fully illustrate the invention, although the invention is not limited by these Examples. The apparatuses used were as follows.

| | |
|---|---|
| (1) Planetary centrifugal mixer: | ARE-310 non-vacuum Thinky Mixer, from Thinky Corporation |
| (2) Dry booth: | Nihon Spindle Manufacturing Co., Ltd. |
| (3) E-type viscometer: | TV-22 viscometer, from Toki Sangyo. The viscosity 5 minutes after starting measurement under the following conditions was used: measurement temperature, 25°C; rotor, 1°34' × R24. A suitable value in the range of 0.1 to 10 rpm for the viscosity of the measurement sample was selected as the rotational speed of the rotor. The viscosity on the day of slurry preparation was measured within 0.5 to 6 hours following preparation. |
| (4) Liquid chromatography-mass spectrometry (LC/MS) | |
| Liquid chromatograph: | Nexera X2, from Shimadzu Corporation |
| Mass spectrometer (MS): | Q-Exactive, from Thermo Fisher Scientific |
| Column: | XBridge C18, 2.1×150 mm (5 μm) |
| Eluant: | acetonitrile with formic acid added to 0.1% (vol/vol) concentration/pure water with formic acid added to 0.1% (vol/vol) concentration = 20/80 to 95/15 (12 min) - 95/5 (13 min) |
| Ionization process: | ESI+ |

The starting materials and other reagents used were as follows.

<Active Materials>

| | |
|---|---|
| NCA: | Lithium nickelate ($LiNi_{0.88}Co_{0.11}Al_{0.01}O_2$; NCA-034H; Ni content, 55 wt%), from Ecopro |
| NCM811: | Lithium nickel manganese cobaltate ($LiNi_{0.8}Co_{0.1}Mn_{0.1}O_2$, from Ningbo Ronbay New Energy Technology Co., Ltd.; S-800; Ni content, 50 wt%) |

<Binders>

| | |
|---|---|
| Solef-5130: | Polyvinylidene fluoride (PVdF), from Solvay |
| Solef-5140: | Polyvinylidene fluoride (PVdF), from Solvay |

<Conductive Additive>

AB: Denka Black® Li100 (high-purity acetylene black), from Denka Co., Ltd.

<Solvents>

| | |
|---|---|
| NMP: | from Nippon Refine Co., Ltd. |
| Tetrahydrofuran: | from Asahi Rika Seisakusho KK |
| 2-Propanol: | from Junsei Chemical Co., Ltd. |
| Hexane: | from Junsei Chemical Co., Ltd. |

<Additive A>

[Additives Used in Examples]

A1: 1H-1,2,3-Benzotriazole-5-carboxylic acid monohydrate (CBT-1), from Johoku Chemical Co., Ltd. (corresponds to monohydrate of formula (1-1))
A2: 1H-Benzotriazole, from Fujifilm Wako Pure Chemical Corporation (corresponds to formula (1-2))
A3: 1H-1,2,3-Triazole, from Fujifilm Wako Pure Chemical Corporation (corresponds to formula (1-3))
A4: 1H-1,2,4-Triazole, from Tokyo Chemical Industry Co., Ltd. (corresponds to formula (2-1))
A5: 2,3-Dimethyl-1-phenyl-5-pyrazolone, from Tokyo Chemical Industry Co., Ltd. (corresponds to formula (3-1))
A6: 3-Methyl-1-phenyl-5-pyrazolone, from Tokyo Chemical Industry Co., Ltd. (corresponds to formula (4-6))
A7: Benzimidazole, from Tokyo Chemical Industry Co., Ltd. (corresponds to formula (1-4))
A8: 5-Benzimidazolecarboxylic acid, from Tokyo Chemical Industry Co., Ltd. (corresponds to formula (1-5))
A9: X-12-1214A, from Shin-Etsu Chemical Co., Ltd. (corresponds to formula (1-6))
A10: 99 mol% LiOH-neutralized product of CBT-1 (synthesized product) (corresponds to monohydrate of formula (1-15))
A11: 3-Methyl-1-p-tolyl-5-pyrazolone, from Tokyo Chemical Industry Co., Ltd. (corresponds to formula (3-9))
A12: 1-(4-Chlorophenyl)-3-methyl-5-pyrazolone, from Tokyo Chemical Industry Co., Ltd. (corresponds to formula (3-13))
A13: 3-Amino-1-phenyl-2-pyrazolin-5-one, from Tokyo Chemical Industry Co., Ltd. (corresponds to formula (4-10))
A14: Li salt of 3-methyl-1-phenyl-5-pyrazolone (synthesized product) (corresponds to formula (3-5))
A15: Hydantoin, from Tokyo Chemical Industry Co., Ltd.
A16: 5,5-Dimethylhydantoin, from Tokyo Chemical Industry Co., Ltd.
A17: 1,2-Benzisothiazol-3(2H)-one, from Tokyo Chemical Industry Co., Ltd.
A18: 2-Mercaptobenzimidazole, from Tokyo Chemical Industry Co., Ltd.
A19: 5-Mercapto-1-methyltetrazole, from Tokyo Chemical Industry Co., Ltd.

(continued)

A20: 7-Hydroxy-5-methyl-[1,2,4]triazolo[1,5-a]pyrimidine, from Tokyo Chemical Industry Co., Ltd.
A21: Bis(3-methyl-1-phenyl-5-pyrazolone), from Tokyo Chemical Industry Co., Ltd.

[Additives Used in Comparative Examples]

a1: 2-(2-Hydroxyphenyl)pyridine, from Fujifilm Wako Pure Chemical Corporation
a2: 1,10-Phenanthroline, from Tokyo Chemical Industry Co., Ltd.
a3: 1,8-Naphthyridine, from Tokyo Chemical Industry Co., Ltd.
a4: 4-Vinylpyridine, from Tokyo Chemical Industry Co., Ltd.
a5: Pyridine, from Fujifilm Wako Pure Chemical Corporation
a6: Poly(4-vinylpyridine), from Sigma-Aldrich
a7: WS-700 (oxazoline group-containing polymer), from Nippon Shokubai Co., Ltd.; Mw, 40,000; reactive crosslinking agent
a8: 2-(1,3-Phenylene)bis-2-oxazoline (PBO), from Fujifilm Wako Pure Chemical Corporation; reactive crosslinking agent
a9: Polyacrylic acid, from Toagosei Co., Ltd.; Aron AC-10P; Mw, 5,000
a10: Oxalic acid, from Fujifilm Wako Pure Chemical Corporation
a11: Phenylboronic acid, from Cangzhou Pure Science Co., Ltd.
a12: Benzoic acid, from Fujifilm Wako Pure Chemical Corporation
a13: Tannic acid, from Fujifilm Wako Pure Chemical Corporation
a14: Water-soluble methylolmelamine (Nikaresin S176 (triazine structure), from Nippon Carbide Industries Co., Inc.
a15: Isobam 18 (copolymer of isobutylene and maleic anhydride), from Kuraray Co., Ltd.; Mw, 300,000 to 350,000
a16: Anthranil, from Tokyo Chemical Industry Co., Ltd.)

<Other Additives>

PVP: Pitzcol K90, from DKS Co., Ltd.; Mw, 1,200,000; dispersing agent
PAN: H-PAN, from Dolan GmbH; Mw, 200,000; dispersing agent

[Synthesis Example 1]

Synthesis of Additive A10 (99 mol% LiOH-neutralized product of CBT-1)

Neutralization was effected by mixing together a solution of 4.43 g of 1H-1,2,3-benzotriazole-5-carboxyic acid (CBT-1) dissolved in 22.72 g of NMP, 111 g of NMP and a solution of 0.58 g of LiOH (Tokyo Chemical Industry Co., Ltd.) dissolved in 23.69 g of pure water, carrying out one hour of mixture under stirring, and then leaving the mixture at rest for 24 hours. Using a vacuum distilling apparatus and an oil bath, the mixture was vacuum distilled for 0.5 hour at 85°C and 20 Torr and then for one hour at 110°C to 120°C and 50 to 20 Torr, giving a 5 wt% NMP solution of the LiOH neutralized product of CBT-1.

[Synthesis Example 2]

Synthesis of Additive A14 (lithium salt of 3-methyl-1-phenyl-5-pyrazlone)

BuLi in hexane (ca. 15% in hexane, ca. 1.6 mol/L; from Tokyo Chemical Industry Co., Ltd.) was added in an amount of 6.25 mL to a solution of 1.76 g of 3-methyl-1-phenyl-5-pyrazolone dissolved in 60.14 g of tetrahydrofuran and stirred at room temperature for one hour. Five grams of 2-propanol was then added, and the mixture was stirred for one

hour. The resulting solution was poured into 240 g of hexane, bringing about re-precipitation, and the precipitate that formed was recovered using a Kiriyama funnel. This was dried in vacuo at 80°C for 3 hours, giving the lithium salt of 3-methyl-1-phenyl-5-pyrazolone.

The amount of heterocycle-containing compound (additive or gelation inhibitor) adhering to the active material can be obtained in each case by dispersing the active material in a solution prepared by dissolving the particular compound in a solvent, quantitatively determining the compound concentration in the filtrate obtained by filtering the dispersion, and ascertaining the decrease in concentration from the charged concentration of the compound. Any common method of quantitative analysis, such as liquid chromatography-mass spectrometry (LC/MS) or NMR, may be selected and used to determine the heterocycle-containing compound concentration in the filtrate. In addition, the percent adsorption can be determined by using the following formula.

$$\text{Adsorption (\%)} = \text{(charged concentration of compound - compound concentration in filtrate)/(charged concentration of compound)}$$

A positive electrode active material, an additive (gelation inhibitor) and NMP were mixed together within a dry booth so as to arrive at the compositional ratio shown in Table 1; mixing was carried out for one hour with a mixing rotor. The active material was removed by filtering the mixture with a 0.2 μm filter, and the filtrate was recovered. The filtrate thus obtained was diluted, where necessary, with methanol. Dilution was set to 1,100-fold dilution in Evaluation Example 1, 110-fold dilution in Evaluation Examples 2 and 3, and 11-fold dilution in Evaluation Example 4. Dilution was not carried out in Evaluation Examples 5 and 6. In these Examples, using LC/MS measurement, an extracted ion chromatogram was plotted, the additive concentration was quantitatively determined from the peak surface area values on the resulting chromatogram and a working curve prepared beforehand, and the percent adhesions of the respective additives were calculated.

[Table 1]

| | Additive A | Amount charged (g) | | | Charged concentration of additive w/r NMP (ppm) | Additive concentration in filtrate (ppm) | Percent adhesion (%) |
|---|---|---|---|---|---|---|---|
| | | Active material (NCM811) | NMP | Additive A | | | |
| Evaluation Example 1 | A6 | 8 | 2 | 0.04 | 20,000 | 5,146 | 74 |
| Evaluation Example 2 | A6 | 8 | 2 | 0.008 | 4,000 | 514 | 87 |
| Evaluation Example 3 | A6 | 8 | 2 | 0.004 | 2,000 | 323 | 84 |
| Evaluation Example 4 | A6 | 8 | 2 | 0.0008 | 400 | 24 | 94 |
| Evaluation Example 5 | A6 | 8 | 2 | 0.0004 | 200 | 15 | 92 |
| Evaluation Example 6 | A6 | 8 | 2 | 0.00008 | 40 | 3 | 91 |

• Preparation of Positive Electrode Composition (Electrode Slurry)

[Examples 1-1 to 1-35, Comparative Examples 1-1 to 1-19]

NMP solutions (5 wt%) of each additive were prepared. A 7 wt% NMP solution of PVdF was prepared. Within a dry booth, the positive electrode active material, binder solution, conductive additive, additive A solution, additive B solution, NMP and water were mixed together such as to arrive at the compositional ratios shown in Tables 2, 3 and 5; mixture was carried out using a planetary centrifugal mixer, thereby giving electrode slurries. The total amount of slurry prepared was 20 g in each case and the slurry was adjusted so as to set the solids content to 71 wt% and the solvent composition of the slurry to NMP/$H_2O$ = 97/3 (weight ratio). The water was added in order to deliberately create a high moisture state within the slurry.

The method of preparation is described below in greater detail.

NMP solutions (5 wt%) of each additive were prepared. A 7 wt% NMP solution of PVdF was prepared. Within a dry booth, the conductive additive and the binder solution were weighed out such as to arrive at the compositional ratios shown in Tables 2, 3 and 5, and 5 minutes of mixing treatment at 2,000 rpm was carried out using a planetary centrifugal mixer. To this was added just one-half of the positive electrode active material, and 5 minutes of mixing treatment was carried out at 2,000 rpm. The remaining half of the positive electrode active material was then added, and 5 minutes of mixing treatment was carried out at 2,000 rpm. Next, the additive A solution, additive B solution, NMP and water were added, and 5 minutes of mixing treatment was carried out at 2,000 rpm. By stirring all of the mixture with a spatula and carrying out 5 minutes of mixing treatment at 2,000 rpm, an electrode slurry was obtained. The total amount of slurry prepared was 20 g in each case and the slurry was adjusted so as to set the solids content to 71 wt% and the solvent composition of the slurry to NMP/$H_2O$ = 97/3 (weight ratio). The water was added in order to intentionally create a high moisture state within the slurry.

[Examples 1-36 to 1-41]

A 7 wt% NMP solution of PVdF was prepared. Within a dry booth, the positive electrode active material, binder solution, conductive additive, additive A, NMP and water were mixed together such as to arrive at the compositional ratios shown in Table 4; mixture was carried out using a planetary centrifugal mixer, thereby giving electrode slurries. The total amount of slurry prepared was 20 g in each case and the slurry was adjusted so as to set the solids content to 71 wt% and the solvent composition of the slurry to NMP/$H_2O$ = 97/3 (weight ratio). The water was added in order to deliberately create a high moisture state within the slurry.

The method of preparation is described below in greater detail.

A 7 wt% NMP solution of PVdF was prepared. Within a dry booth, the conductive additive and the binder solution were weighed out so as to arrive at the compositional ratios shown in Table 4, and 5 minutes of mixing treatment at 2,000 rpm was carried out using a planetary centrifugal mixer. To this was added just one-half of the positive electrode active material, and 5 minutes of mixing treatment was carried out at 2,000 rpm. The remaining half of the positive electrode active material was then added, and 5 minutes of mixing treatment was carried out at 2,000 rpm. Next, additive A, NMP and water were added, and 5 minutes of mixing treatment was carried out at 2,000 rpm. By stirring all of the mixture with a spatula and carrying out 5 minutes of mixing treatment at 2,000 rpm, an electrode slurry was obtained. The total amount of slurry prepared was 20 g in each case and the slurry was adjusted so as to set the solids content to 71 wt% and the solvent composition of the slurry to NMP/$H_2O$ = 97/3 (weight ratio). The water was added in order to deliberately create a high moisture state within the slurry.

[Example 1-42, Comparative Example 1-20]

A 7 wt% NMP solution of PVdF was prepared. Within a dry booth, the positive electrode active material, binder solution, additive A, NMP and water were mixed together such as to arrive at the compositional ratios shown in Table 4; mixture was carried out using a planetary centrifugal mixer, thereby giving electrode slurries. The total amount of slurry prepared was 19.76 g in each case and the slurry was adjusted so as to set the solids content to 79.76 wt% and the solvent composition of the slurry to NMP/$H_2O$ = 97/3 (weight ratio). The water was added in order to deliberately create a high moisture state within the slurry.

The method of preparation is described below in greater detail.

A 7 wt% NMP solution of PVdF was prepared. Within a dry booth, the binder solution and the additive A solution were weighed out so as to arrive at the compositional ratios shown in Tables 4 and 5, and 5 minutes of mixing treatment at 2,000 rpm was carried out using a planetary centrifugal mixer. To this was added just one-half of the positive electrode active material, and 5 minutes of mixing treatment was carried out at 2,000 rpm. The remaining half of the positive electrode active material was then added, and 5 minutes of mixing treatment was carried out at 2,000 rpm. Next, the conductive additive, NMP and water were added, and 5 minutes of mixing treatment was carried out at 2,000 rpm. By stirring all of the mixture with a spatula and carrying out 5 minutes of mixing treatment at 2,000 rpm, an electrode slurry was obtained. The total amount of slurry prepared was 19.76 g in each case and the slurry was adjusted so as to set the solids content to 79.76 wt% and the solvent composition of the slurry to NMP/$H_2O$ = 97/3 (weight ratio). The water was added in order to deliberately create a high moisture state within the slurry.

[Example 1-43 to 1-49, Comparative Example 1-21]

NMP solutions (5 wt%) of each additive were prepared. A 7 wt% NMP solution of PVdF was prepared. Within a dry booth, the positive electrode active material, binder solution, conductive additive, additive A solution, NMP and water were mixed together such as to arrive at the compositional ratios shown in Tables 4 and 5; mixture was carried out using a planetary centrifugal mixer, thereby giving electrode slurries. The total amount of slurry prepared was 20 g in each case

and the slurry was adjusted so as to set the solids content to 80 wt% and the solvent composition of the slurry to NMP/$H_2O$ = 97/3 (weight ratio). The water was added in order to deliberately create a high moisture state within the slurry.

The method of preparation is described below in greater detail.

NMP solutions (5 wt%) of each additive were prepared. A 7 wt% NMP solution of PVdF was prepared. Within a dry booth, the binder solution and the additive A solution were weighed out so as to arrive at the compositional ratios shown in Tables 4 and 5, and 5 minutes of mixing treatment at 2,000 rpm was carried out using a planetary centrifugal mixer. To this was added just one-half of the positive electrode active material, and 5 minutes of mixing treatment was carried out at 2,000 rpm. The remaining half of the positive electrode active material was then added, and 5 minutes of mixing treatment was carried out at 2,000 rpm. Next, the conductive additive, NMP and water were added, and 5 minutes of mixing treatment was carried out at 2,000 rpm. By stirring all of the mixture with a spatula and carrying out 5 minutes of mixing treatment at 2,000 rpm, an electrode slurry was obtained. The total amount of slurry prepared was 20 g in each case and the slurry was adjusted so as to set the solids content to 80 wt% and the solvent composition of the slurry to NMP/$H_2O$ = 97/3 (weight ratio). The water was added in order to intentionally create a high moisture state within the slurry.

Viscosity measurements of the slurries obtained as described above were carried out with an E-type viscometer immediately after slurry preparation. In addition, the slurries were visually checked for the presence or absence of gelation after 24 hours of storage at 40°C. For slurries that did not gel, the presence/absence of a thickening and gelling tendency was checked by similarly carrying out viscosity measurements using an E-type viscometer, and the slurries were rated based on the following criteria. These evaluations are collectively presented in the tables.

<<Rating Criteria>>

A: No gelation; change in viscosity < 200%
B: No gelation, but change in viscosity ≥ 200% and thickening is pronounced
C: Composition gelled, making use in electrode formation impossible

$$\text{Change in viscosity (\%)} = ((\text{viscosity after storage} - \text{initial viscosity})/\text{initial viscosity}) \times 100$$

[Table 2]

| | Solid ingredients (wt%) | | | | | Viscosity (mPa·s) | | Change in viscosity (%) | Evaluation |
|---|---|---|---|---|---|---|---|---|---|
| | Positive electrode active material | Fluorinated binder | Conductive additive | Additive A | Additive B | Same day | After storage | | |
| Example 1-1 | NCA-034-H (96.90) | Solef-5140 (1.50) | AB (1.50) | A1 (0.100) | - | 7,030 | 2,831 | -60 | A |
| Example 1-2 | NCA-034-H (96.95) | Solef-5140 (1.50) | AB (1.50) | A1 (0.050) | - | 6,790 | 2,130 | -69 | A |
| Example 1-3 | NCA-034-H (96.97) | Solef-5140 (1.50) | AB (1.50) | A1 (0.030) | - | 6,060 | 1,584 | -74 | A |
| Example 1-4 | NCA-034-H (96.99) | Solef-5140 (1.50) | AB (1.50) | A1 (0.010) | - | 5,000 | 1,980 | -60 | A |
| Example 1-5 | NCA-034-H (97.00) | Solef-5140 (1.50) | AB (1.50) | A1 (0.005) | - | 3,573 | 9,400 | 163 | A |
| Example 1-6 | NCA-034-H (96.99) | Solef-5140 (1.50) | AB (1.50) | A2 (0.010) | - | 4,320 | 4,112 | -5 | A |
| Example 1-7 | NCA-034-H (96.99) | Solef-5140 (1.50) | AB (1.50) | A3 (0.010) | - | 4,740 | 1,738 | -63 | A |

(continued)

| | Solid ingredients (wt%) | | | | | Viscosity (mPa·s) | | Change in viscosity (%) | Evaluation |
|---|---|---|---|---|---|---|---|---|---|
| | Positive electrode active material | Fluorinated binder | Conductive additive | Additive A | Additive B | Same day | After storage | | |
| Example 1-8 | NCA-034-H (96.99) | Solef-5140 (1.50) | AB (1.50) | A4 (0.010) | - | 4,470 | 2,596 | -42 | A |
| Example 1-9 | NCA-034-H (96.99) | Solef-5140 (1.50) | AB (1.50) | A5 (0.010) | - | 1,962 | 3,764 | 92 | A |
| Example 1-10 | NCA-034-H (96.99) | Solef-5140 (1.50) | AB (1.50) | A6 (0.010) | - | 2,270 | 1,390 | -39 | A |
| Example 1-11 | NCA-034-H (96.99) | Solef-5140 (1.50) | AB (1.50) | A7 (0.010) | - | 2,280 | 2,980 | 31 | A |
| Example 1-12 | NCA-034-H (96.99) | Solef-5140 (1.50) | AB (1.50) | A8 (0.010) | - | 4,070 | 4,410 | 8 | A |
| Example 1-13 | NCA-034-H (96.90) | Solef-5140 (1.50) | AB (1.50) | A9 (0.100) | - | 5,910 | 1,781 | -70 | A |
| Example 1-14 | NCA-034-H (96.99) | Solef-5140 (1.50) | AB (1.50) | A10 (0.010) | - | 3,100 | 4,579 | 48 | A |
| Example 1-15 | NCA-034-H (96.95) | Solef-5140 (1.50) | AB (1.50) | A10 (0.050) | - | 4,670 | 1,341 | -71 | A |
| Example 1-16 | NCA-034-H (96.90) | Solef-5140 (1.50) | AB (1.50) | A1 (0.010) | PVP (0.090) | 2,030 | 2,097 | 3 | A |
| Example 1-17 | NCA-034-H (96.90) | Solef-5140 (1.50) | AB (1.50) | A1 (0.030) | PVP (0.070) | 2,758 | 674 | -76 | A |

[Table 3]

| | Solid ingredients (wt%) | | | | | Viscosity (mPa·s) | | Change in viscosity (%) | Evaluation |
|---|---|---|---|---|---|---|---|---|---|
| | Positive electrode active material | Fluorinated binder | Conductive additive | Additive A | Additive B | Same day | After storage | | |
| Example 1-18 | NCA-034-H (96.95) | Solef-5140 (1.50) | AB (1.50) | A1 (0.015) | PVP (0.035) | 1,707 | 523 | -69 | A |
| Example 1-19 | NCA-034-H (96.97) | Solef-5140 (1.50) | AB (1.50) | A1 (0.009) | PVP (0.021) | 1,314 | 602 | -54 | A |
| Example 1-20 | NCA-034-H (96.99) | Solef-5140 (1.50) | AB (1.50) | A1 (0.003) | PVP (0.007) | 1,612 | 2,997 | 86 | A |
| Example 1-21 | NCA-034-H (96.95) | Solef-5140 (1.50) | AB (1.50) | A2 (0.015) | PVP (0.035) | 1,584 | 492 | -69 | A |
| Example 1-22 | NCA-034-H (96.90) | Solef-5140 (1.50) | AB (1.50) | A4 (0.030) | PVP (0.070) | 2,162 | 894 | -59 | A |
| Example 1-23 | NCA-034-H (96.90) | Solef-5140 (1.50) | AB (1.50) | A9 (0.030) | PVP (0.070) | 2,464 | 1,130 | -54 | A |
| Example 1-24 | NCA-034-H (96.90) | Solef-5140 (1.50) | AB (1.50) | A5 (0.050) | PVP (0.050) | 1,264 | 1,178 | -7 | A |

(continued)

| | Solid ingredients (wt%) | | | | | Viscosity (mPa·s) | | Change in viscosity (%) | Evaluation |
|---|---|---|---|---|---|---|---|---|---|
| | Positive electrode active material | Fluorinated binder | Conductive additive | Additive A | Additive B | Same day | After storage | | |
| Example 1-25 | NCA-034-H (96.90) | Solef-5140 (1.50) | AB (1.50) | A6 (0.050) | PVP (0.050) | 2.262 | 814 | -64 | A |
| Example 1-26 | NCA-034-H (96.90) | Solef-5140 (1.50) | AB (1.50) | A6 (0.030) | PVP (0.070) | 1,844 | 2,378 | 29 | A |
| Example 1-27 | NCA-034-H (96.95) | Solef-5140 (1.50) | AB (1.50) | A8 (0.015) | PVP (0.035) | 1,641 | 773 | -53 | A |
| Example 1-28 | NCA-034-H (96.90) | Solef-5140 (1.50) | AB (1.50) | A1 (0.030) | PAN (0.070) | 2,807 | 1,390 | -50 | A |
| Example 1-29 | NCA-034-H (96.90) | Solef-5140 (1.50) | AB (1.50) | A1 (0.010) | PAN (0.090) | 3,002 | 4,420 | 47 | A |
| Example 1-30 | NCA-034-H (96.90) | Solef-5140 (1.50) | AB (1.50) | A10 (0.050) | PAN (0.050) | 3,687 | 2,320 | -37 | A |
| Example 1-31 | NCM811-S800 (96.99) | Solef-5140 (1.50) | AB (1.50) | A1 (0.010) | - | 5,140 | 3,322 | -35 | A |
| Example 1-32 | NCM811-S800 (97.00) | Solef-5140 (1.50) | AB (1.50) | A1 (0.005) | - | 4,600 | 2,441 | -47 | A |
| Example 1-33 | NCM811-S800 (97.00) | Solef-5140 (1.50) | AB (1.50) | A1 (0.001) | - | 4,610 | 4,026 | -13 | A |
| Example 1-34 | NCA-034-H (96.90) | Solef-5140 (1.50) | AB (1.50) | A11 (0.1) | - | 4,230 | 3,244 | -23 | A |
| Example 1-35 | NCA-034-H (96.90) | Solef-5140 (1.50) | AB (1.50) | A12 (0.1) | - | 3,400 | 2,182 | -36 | A |

[Table 4]

| | Solid ingredients (wt%) | | | | | Viscosity (mPa·s) | | Change in viscosity (%) | Evaluation |
|---|---|---|---|---|---|---|---|---|---|
| | Positive electrode active material | Fluorinated binder | Conductive additive | Additive A | Additive B | Same day | After storage | | |
| Example 1-36 | NCA-034-H (96.90) | Solef-5140 (1.50) | AB (1.50) | A13 (0.1) | - | 4,480 | 3,102 | -31 | A |
| Example 1-37 | NCA-034-H (96.90) | Solef-5140 (1.50) | AB (1.50) | A14 (0.1) | - | 3,680 | 2,344 | -36 | A |
| Example 1-38 | NCA-034-H (96.90) | Solef-5140 (1.50) | AB (1.50) | A2 (0.1) | - | 4,420 | 2,616 | -41 | A |
| Example 1-39 | NCA-034-H (96.90) | Solef-5140 (1.50) | AB (1.50) | A6 (0.1) | - | 3,890 | 3,309 | -15 | A |
| Example 1-40 | NCA-034-H (96.90) | Solef-5140 (1.50) | AB (1.50) | A4 (0.1) | - | 4,500 | 1,342 | -70 | A |

(continued)

| | Solid ingredients (wt%) | | | | | Viscosity (mPa·s) | | Change in viscosity (%) | Evaluation |
|---|---|---|---|---|---|---|---|---|---|
| | Positive electrode active material | Fluorinated binder | Conductive additive | Additive A | Additive B | Same day | After storage | | |
| Example 1-41 | NCA-034-H (96.90) | Solef-5140 (1.50) | AB (1.50) | A11 (0.1) | - | 4,340 | 3,887 | -10 | A |
| Example 1-42 | NCA-034-H (98.88) | Solef-5140 (1.02) | - | A6 (0.1) | - | 4,606 | 2,872 | -38 | A |
| Example 1-43 | NCA-034-H (97.40) | Solef-5130 (1.00) | AB (1.50) | A15 (0.10) | - | 315,100 | 166,400 | -47 | A |
| Example 1-44 | NCA-034-H (97.40) | Solef-5130 (1.00) | AB (1.50) | A16 (0.10) | - | 166,700 | 162,600 | -2 | A |
| Example 1-45 | NCA-034-H (97.40) | Solef-5130 (1.00) | AB (1.50) | A17 (0.10) | - | 313,000 | 201,800 | -36 | A |
| Example 1-46 | NCA-034-H (97.40) | Solef-5130 (1.00) | AB (1.50) | A18 (0.10) | - | 347,300 | 198,000 | -43 | A |
| Example 1-47 | NCA-034-H (97.40) | Solef-5130 (1.00) | AB (1.50) | A19 (0.10) | - | 319,900 | 219,200 | -31 | A |
| Example 1-48 | NCA-034-H (97.40) | Solef-5130 (1.00) | AB (1.50) | A20 (0.10) | - | 347,000 | 260,400 | -25 | A |
| Example 1-49 | NCA-034-H (97.40) | Solef-5130 (1.00) | AB (1.50) | A21 (0.10) | - | 296,000 | 197,000 | -33 | A |

[Table 5]

| | Solid ingredients (wt%) | | | | | Viscosity (mPa·s) | | Change in viscosity (%) | Evaluation |
|---|---|---|---|---|---|---|---|---|---|
| | Positive electrode active material | Fluorinated binder | Conductive additive | Additive A | Additive B | Same day | After storage | | |
| Comparative Example 1-1 | NCA-034H (97.00) | Solef-5140 (1.50) | AB (1.50) | - | - | 3,038 | Gelled | - | C |
| Comparative Example 1-2 | NCA-034H (96.90) | Solef-5140 (1.50) | AB (1.50) | - | PAN (0.100) | 3,310 | Gelled | - | C |
| Comparative Example 1-3 | NCA-034H (96.90) | Solef-5140 (1.50) | AB (1.50) | - | PVP (0.100) | 2,234 | Gelled | - | C |
| Comparative Example 1-4 | NCA-034H (96.99) | Solef-5140 (1.50) | AB (1.50) | a1 (0.010) | - | 2,502 | Gelled | - | C |
| Comparative Example 1-5 | NCA-034H (96.99) | Solef-5140 (1.50) | AB (1.50) | a2 (0.010) | - | 2,509 | Gelled | - | C |
| Comparative Example 1-6 | NCA-034H (96.99) | Solef-5140 (1.50) | AB (1.50) | a3 (0.010) | - | 2,426 | Gelled | - | C |
| Comparative Example 1-7 | NCA-034H (96.99) | Solef-5140 (1.50) | AB (1.50) | a4 (0.010) | - | 2,784 | Gelled | - | C |
| Comparative Example 1-8 | NCA-034H (96.99) | Solef-5140 (1.50) | AB (1.50) | a5 (0.010) | - | 2,336 | 10,480 | 349 | B |
| Comparative Example 1-9 | NCA-034H (96.99) | Solef-5140 (1.50) | AB (1.50) | a6 (0.010) | - | 2,200 | 10,510 | 378 | B |
| Comparative Example 1-10 | NCA-034H (96.90) | Solef-5140 (1.50) | AB (1.50) | a7 (0.100) | - | 4,100 | Gelled | - | C |
| Comparative Example 1-11 | NCA-034H (96.99) | Solef-5140 (1.50) | AB (1.50) | a8 (0.010) | - | 2,463 | 12,570 | 410 | B |
| Comparative Example 1-12 | NCA-034H (96.90) | Solef-5140 (1.50) | AB (1.50) | a10 (0.100) | - | 6,700 | 29,340 | 338 | B |
| Comparative Example 1-13 | NCA-034H (96.99) | Solef-5140 (1.50) | AB (1.50) | a11 (0.010) | - | 3,281 | Gelled | - | C |
| Comparative Example 1-14 | NCA-034H (96.99) | Solef-5140 (1.50) | AB (1.50) | a12 (0.010) | - | 3,820 | 14,460 | 279 | B |

(continued)

| | Solid ingredients (wt%) | | | | | Viscosity (mPa·s) | | Change in viscosity (%) | Evaluation |
|---|---|---|---|---|---|---|---|---|---|
| | Positive electrode active material | Fluorinated binder | Conductive additive | Additive A | Additive B | Same day | After storage | | |
| Comparative Example 1-15 | NCA-034H (96.90) | Solef-5140 (1.50) | AB (1.50) | a9 (0.010) | PAN (0.090) | 3,612 | Gelled | - | C |
| Comparative Example 1-16 | NCA-034H (96.90) | Solef-5140 (1.50) | AB (1.50) | a13 (0.050) | PAN (0.050) | 4,430 | 68,100 | 1,437 | B |
| Comparative Example 1-17 | NCA-034H (96.90) | Solef-5140 (1.50) | AB (1.50) | a14 (0.050) | PAN (0.050) | 4,186 | Gelled | - | C |
| Comparative Example 1-18 | NCA-034H (96.90) | Solef-5140 (1.50) | AB (1.50) | a15 (0.050) | PAN (0.050) | 8,890 | Gelled | - | C |
| Comparative Example 1-19 | NCM811-S800 (97.00) | Solef-5140 (1.50) | AB (1.50) | - | - | 4,300 | 13,160 | 206 | B |
| Comparative Example 1-20 | NCA-034H (98.98) | Solef-5140 (1.02) | - | - | - | 2,093 | Gelled | - | C |
| Comparative Example 1-21 | NCA-034H (97.40) | Solef-5130 (1.00) | AB (1.50) | a16 (0.10) | - | 226,600 | Gelled | - | C |

The results in Tables 2 to 5 demonstrate that, in the electrode-forming compositions of the invention to which a specific heterocycle-containing compound has been added, thickening and gelation are suppressed and the shelf stability is enhanced.

Hence, even when some time has passed following preparation of the electrode-forming composition, the coating properties remain intact, enabling the composition to be suitably used in the industrial production of lithium-ion secondary batteries.

[Examples 1-50 to 1-53]

A 7 wt% NMP solution of PVdF was prepared. Within a dry booth, the positive electrode active material, binder solution, conductive additive, additive A, additive B, NMP and water were mixed together such as to arrive at the compositional ratios shown in Table 6; mixture was carried out using a planetary centrifugal mixer, thereby giving electrode slurries. The total amount of slurry prepared was 20 g in each case and the slurry was adjusted so as to set the solids content to 71 wt% and the solvent composition of the slurry to NMP/$H_2O$ = 97/3 (weight ratio). The water was added in order to deliberately create a high moisture state within the slurry.

The method of preparation is described below in greater detail.

A 7 wt% NMP solution of PVdF was prepared. Within a dry booth, the conductive additive and the binder solution were weighed out so as to arrive at the compositional ratios shown in Table 6, and 5 minutes of mixing treatment at 2,000 rpm was carried out using a planetary centrifugal mixer. To this was added just one-half of the positive electrode active material, and 5 minutes of mixing treatment was carried out at 2,000 rpm. The remaining half of the positive electrode active material was then added, and 5 minutes of mixing treatment was carried out at 2,000 rpm. Next, NMP solutions (5 wt%) of additive A and additive B, NMP and water were added, and 5 minutes of mixing treatment was carried out at 2,000 rpm. By stirring all of the mixture with a spatula and carrying out 5 minutes of mixing treatment at 2,000 rpm, an electrode slurry was obtained. The total amount of slurry prepared was 20 g in each case and the slurry was adjusted so as to set the solids content to 71 wt% and the solvent composition of the slurry to NMP/$H_2O$ = 97/3 (weight ratio). The water was added in order to deliberately create a high moisture state within the slurry.

Viscosity measurements of the slurries obtained as described above were carried out with an E-type viscometer immediately after slurry preparation in the same way as in, for example, Example 1-1. In addition, the slurries were visually checked for the presence or absence of gelation after 24 hours of storage at 40°C. For slurries that did not gel, the presence/absence of a thickening and gelling tendency was checked by similarly carrying out viscosity measurements using an E-type viscometer. The evaluation criteria and the method of calculating the percent change in viscosity were the same as described above. These evaluations are presented in Table 6.

[Table 6]

| | Solid ingredients (wt%) | | | | | Viscosity (mPa·s) | | Change in viscosity (%) | Evaluation |
|---|---|---|---|---|---|---|---|---|---|
| | Positive electrode active material | Fluorinated binder | Conductive additive | Additive A | Additive B | Same day | After storage | | |
| Example 1-50 | NCA-034-H (97.40) | Solef-5140 (1.00) | AB (1.50) | A6 (0.010) | PAN (0.090) | 1,714 | 348 | -80 | A |
| Example 1-51 | NCA-034-H (97.40) | Solef-5140 (1.00) | AB (1.50) | A6 (0.010) | PVP (0.090) | 1,133 | 309 | -73 | A |
| Example 1-52 | NCA-034-H (97.40) | Solef-5140 (1.00) | AB (1.50) | A2 (0.010) | PAN (0.090) | 2,097 | 470 | -78 | A |
| Example 1-53 | NCA-034-H (97.40) | Solef-5140 (1.00) | AB (1.50) | A4 (0.010) | PAN (0.090) | 2,857 | 516 | -82 | A |

The results in Table 6 demonstrate that, in the electrode-forming compositions of the invention to which a specific heterocycle-containing compound has been added, thickening and gelation are suppressed and the shelf stability is enhanced.

Hence, even when some time has passed following preparation of the electrode-forming composition, the coating properties remain intact, enabling the composition to be suitably used in the industrial production of lithium-ion secondary batteries.

**Claims**

1. An electrode-forming composition comprising a positive electrode active material, a binder, a solvent and a heterocycle-containing compound,
wherein the heterocycle-containing compound has a nitrogen-containing five-membered ring, does not include an oxygen atom in the five-membered ring, and has a carbonyl structure on the five-membered ring.

2. The electrode-forming composition of claim 1, wherein the heterocycle-containing compound is adhered to the positive electrode active material.

3. The electrode-forming composition of claim 1, wherein the heterocycle-containing compound is an unfused nitrogen-containing five-membered-ring heterocyclic compound.

4. The electrode-forming composition of claim 1, wherein the carbonyl structure exhibits proton tautomerism.

5. The electrode-forming composition of claim 4, wherein the proton tautomerism is keto-enol tautomerism.

6. The electrode-forming composition of claim 1, wherein the heterocycle-containing compound is represented by either of formulas (3) and (4) below

[Chem. 1]

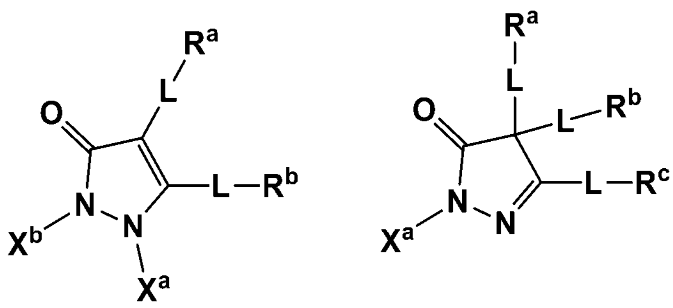

(3) (4)

(wherein $R^a$ to $R^c$ are each independently a hydrogen atom, halogen atom, carboxyl group, hydroxyl group, thiol group, amino group, alkyl group of 1 to 6 carbon atoms which may have a substituent, alkenyl group of 2 to 6 carbon atoms which may have a substituent or aryl group of 6 to 12 carbon atoms which may have a substituent;

$R^a$ and $R^b$ may mutually bond to form a ring of 4 to 12 carbon atoms which may have a substituent;
each L is independently a single bond, carbonyl group, ether bond, ester bond or amide bond;
$X^a$ and $X^b$ are each independently a hydrogen atom, lithium atom, sodium atom, alkyl group of 1 to 6 carbon atoms which may have a substituent, aryl group of 6 to 12 carbon atoms which may have a substituent or $-CH_2NR^d_2$; and
each $R^d$ is independently an alkyl group of 1 to 10 carbon atoms, alkanol group of 1 to 10 carbon atoms, alkenyl group of 2 to 10 carbon atoms or aryl group of 6 to 12 carbon atoms).

7. The electrode-forming composition of claim 1, wherein the substituents on $R^a$ to $R^c$, $X^a$ and $X^b$ are of at least one type selected from the group consisting of carboxyl, hydroxyl, aldehyde, ester, ketone, amino and phenyl groups, halogen atoms and alkoxysilyl, epoxy, carbonyl chloride and thiol groups.

8. The electrode-forming composition of claim 6, wherein the heterocycle-containing compound is represented by formula (4b) below

[Chem. 2]

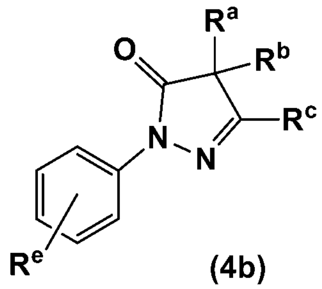

(4b)

(wherein $R^a$ to $R^c$ are the same as above; and
$R^e$ is a hydrogen atom, carboxyl group, hydroxyl group, aldehyde group, ester group, ketone group, amino group, phenyl group, halogen atom, alkoxysilyl group, epoxy group, carbonyl chloride group or thiol group).

**9.** The electrode-forming composition of claim 1, wherein the heterocycle-containing compound is a solid at normal temperature.

**10.** The electrode-forming composition of claim 1, further comprising a conductive additive.

**11.** The electrode-forming composition of claim 1, wherein the positive electrode active material contains at least 30 wt% nickel.

**12.** The electrode-forming composition of claim 1, wherein the positive electrode active material contains at least 40 wt% nickel.

**13.** The electrode-forming composition of claim 1, wherein the positive electrode active material contains at least 50 wt% nickel.

**14.** The electrode-forming composition of claim 1, further comprising a nonionic polymer.

**15.** The electrode-forming composition of claim 14, wherein the nonionic polymer is a polymer having pyrrolidone structures or nitrile groups.

**16.** The electrode-forming composition of claim 15, wherein the nonionic polymer is of at least one type selected from the group consisting of polyvinyl pyrrolidone and polyacrylonitrile.

**17.** The electrode-forming composition of claim 1, wherein the heterocycle-containing compound is included in an amount, based on solids in the composition, of from 0.001 to 0.5 wt%.

**18.** An electrode-forming composition comprising a positive electrode active material, a binder, a solvent and a heterocycle-containing compound,

wherein the heterocycle-containing compound is represented by either of formulas (1) and (2) below

[Chem. 3]

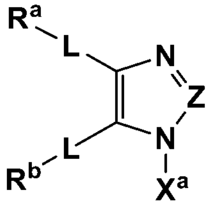

(1)

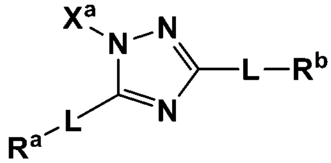

(2)

(wherein, in formula (1), $R^a$ and $R^b$ are each independently a hydrogen atom, carboxyl group, hydroxyl group, thiol group, alkyl group of 1 to 6 carbon atoms which may have a substituent, alkenyl group of 2 to 6 carbon atoms which may have a substituent or aryl group of 6 to 12 carbon atoms which may have a substituent;
$R^a$ and $R^b$ may mutually bond to form a ring of 4 to 12 carbon atoms which may have a substituent;
each L is independently a single bond, carbonyl group, ether bond, ester bond or amide bond;
Z is nitrogen or C-L-$R^c$;
$R^c$ is a hydrogen atom, halogen atom, carboxyl group, hydroxyl group, thiol group, alkyl group of 1 to 6 carbon atoms which may have a substituent, alkenyl group of 2 to 6 carbon atoms which may have a substituent or aryl group of 6 to 12 carbon atoms which may have a substituent;
$X^a$ is a hydrogen atom, lithium atom, sodium atom, alkyl group of 1 to 6 carbon atoms which may have a substituent, aryl group of 6 to 12 carbon atoms which may have a substituent or $-CH_2NR^d{}_2$; and
each $R^d$ is independently an alkyl group of 1 to 10 carbon atoms, alkanol group of 1 to 10 carbon atoms, alkenyl group of 2 to 10 carbon atoms or aryl group of 6 to 12 carbon atoms; and
in formula (2), $R^a$ and $R^b$ are each independently a hydrogen atom, halogen atom, carboxyl group, hydroxyl group, thiol group, alkyl group of 1 to 6 carbon atoms which may have a substituent, alkenyl group of 2 to 6 carbon atoms which may have a substituent or aryl group of 6 to 12 carbon atoms which may have a substituent;
each L is independently a single bond, carbonyl group, ether bond, ester bond or amide bond;
$X^a$ is a hydrogen atom, lithium atom, sodium atom, alkyl group of 1 to 6 carbon atoms which may have a substituent, aryl group of 6 to 12 carbon atoms which may have a substituent or $-CH_2NR^d{}_2$; and
each $R^d$ is independently an alkyl group of 1 to 10 carbon atoms, alkanol group of 1 to 10 carbon atoms, alkenyl group of 2 to 10 carbon atoms or aryl group of 6 to 12 carbon atoms).

**19.** The electrode-forming composition of claim 18, wherein the heterocycle-containing compound is adhered to the positive electrode active material.

**20.** The electrode-forming composition of claim 18, wherein the substituents on $R^a$ to $R^c$, $X^a$ and $X^b$ are of at least one type selected from the group consisting of carboxyl, hydroxyl, aldehyde, ester, ketone and phenyl groups, halogen atoms and alkoxysilyl, epoxy, carbonyl chloride and thiol groups.

**21.** The electrode-forming composition of claim 18, wherein the heterocycle-containing compound is a heterocycle-containing compound of formula (5) below

[Chem. 4]

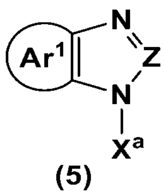

(5)

(wherein $Ar^1$ is an aromatic ring of 4 to 12 carbon atoms which may have a substituent or an aliphatic ring of 4 to 10 carbons which may have a substituent; and Z and $X^a$ are the same as above).

**22.** The electrode-forming composition of claim 21, wherein the heterocycle-containing compound is a heterocycle-containing compound of either of formulas (6) and (7) below

[Chem. 5]

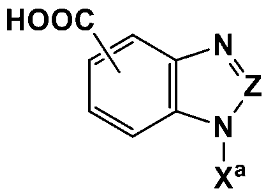

(6)

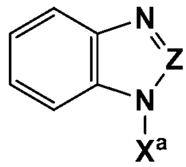

(7)

(wherein Z and $X^a$ are the same as above).

**23.** The electrode-forming composition of claim 18, wherein Z is nitrogen.

**24.** The electrode-forming composition of claim 18, further comprising a conductive additive.

**25.** The electrode-forming composition of claim 18, wherein the positive electrode active material contains at least 30 wt% nickel.

**26.** The electrode-forming composition of claim 18, wherein the positive electrode active material contains at least 40 wt% nickel.

**27.** The electrode-forming composition of claim 18, wherein the positive electrode active material contains at least 50 wt% nickel.

**28.** The electrode-forming composition of claim 18, further comprising a nonionic polymer.

**29.** The electrode-forming composition of claim 28, wherein the nonionic polymer is a polymer having pyrrolidone structures or nitrile groups.

**30.** The electrode-forming composition of claim 29, wherein the nonionic polymer is of at least one type selected from the group consisting of polyvinyl pyrrolidone and polyacrylonitrile.

**31.** The electrode-forming composition of claim 18, wherein the heterocycle-containing compound is included in an amount, based on solids in the composition, of from 0.001 to 0.5 wt%.

**32.** An electrode layer obtained from the electrode-forming composition of any one of claims 1 to 31.

**33.** An electrode comprising the electrode layer of claim 32.

**34.** A secondary battery comprising the electrode of claim 33.

**35.** A method of preparing the electrode-forming composition of claim 1, comprising the steps of:

preparing a dispersion by mixing together a positive electrode active material, a binder and a solvent; and
mixing together the dispersion and a heterocycle-containing compound.

**36.** The electrode-forming composition preparing method of claim 35, wherein a conductive additive is additionally mixed in the dispersion preparing step.

**37.** A method of preparing the electrode-forming composition of claim 18, comprising the steps of:

preparing a dispersion by mixing together a positive electrode active material, a binder and a solvent; and
mixing together the dispersion and a heterocycle-containing compound.

**38.** The electrode-forming composition preparing method of claim 37, wherein a conductive additive is additionally mixed in the dispersion preparing step.

**39.** An additive for an electrode slurry containing a positive electrode active material, a binder and a solvent, wherein the additive comprises a heterocycle-containing compound which has a nitrogen-containing five-membered ring, does not include an oxygen atom in the five-membered ring, and has a carbonyl structure on the five-membered ring.

**40.** The additive of claim 39, wherein the heterocycle-containing compound is an unfused nitrogen-containing, five-membered-ring heterocyclic compound.

**41.** The additive of claim 39, wherein the carbonyl structure exhibits proton tautomerism.

**42.** The additive of claim 41, wherein the proton tautomerism is keto-enol tautomerism.

**43.** The additive of claim 39, wherein the heterocycle-containing compound is represented by either of formulas (3) and (4) below

[Chem. 6]

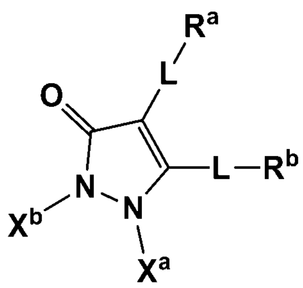

(3)

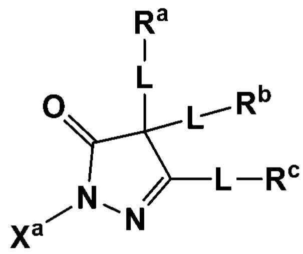

(4)

(wherein $R^a$ to $R^c$ are each independently a hydrogen atom, halogen atom, carboxyl group, hydroxyl group, thiol group, amino group, alkyl group of 1 to 6 carbon atoms which may have a substituent, alkenyl group of 2 to 6 carbon atoms which may have a substituent or aryl group of 6 to 12 carbon atoms which may have a substituent;

$R^a$ and $R^b$ may mutually bond to form a ring of 4 to 12 carbon atoms which may have a substituent;
each L is independently a single bond, carbonyl group, ether bond, ester bond or amide bond;
$X^a$ and $X^b$ are each independently a hydrogen atom, lithium atom, sodium atom, alkyl group of 1 to 6 carbon atoms which may have a substituent, aryl group of 6 to 12 carbon atoms which may have a substituent or $-CH_2NR^d{}_2$; and each $R^d$ is independently an alkyl group of 1 to 10 carbon atoms, alkanol group of 1 to 10 carbon atoms, alkenyl group of 2 to 10 carbon atoms or aryl group of 6 to 12 carbon atoms).

**44.** The additive of claim 43, wherein the substituents on $R^a$ to $R^c$, $X^a$ and $X^b$ are of at least one type selected from the group consisting of carboxyl, hydroxyl, aldehyde, ester, ketone, amino and phenyl groups, halogen atoms and alkoxysilyl, epoxy, carbonyl chloride and thiol groups.

**45.** The additive of claim 43, wherein the heterocycle-containing compound is represented by formula (4b) below

[Chem. 7]

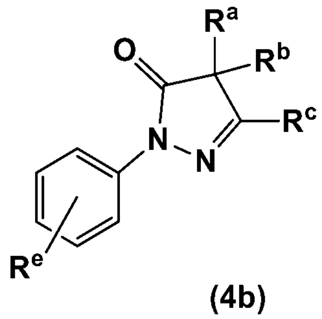

(4b)

(wherein $R^a$ to $R^c$ are the same as above; and
$R^e$ is a hydrogen atom, carboxyl group, hydroxyl group, aldehyde group, ester group, ketone group, amino group, phenyl group, halogen atom, alkoxysilyl group, epoxy group, carbonyl chloride group or thiol group).

**46.** The additive of claim 39, wherein the heterocycle-containing compound is a solid at normal temperature.

**47.** The additive of claim 39, wherein the positive electrode active material contains at least 30 wt% nickel.

**48.** The additive of claim 39, further comprising a nonionic polymer.

**49.** The additive of claim 48, wherein the nonionic polymer is a polymer having pyrrolidone structures or nitrile groups.

**50.** The additive of claim 49, wherein the nonionic polymer is of at least one type selected from the group consisting of polyvinyl pyrrolidone and polyacrylonitrile.

**51.** The additive of claim 39, further comprising a solvent.

**52.** An additive for an electrode slurry containing a positive electrode active material, a binder and a solvent,

wherein the additive comprises a heterocycle-containing compound represented by either of formulas (1) and (2) below

[Chem. 8]

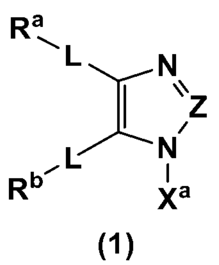

(1)

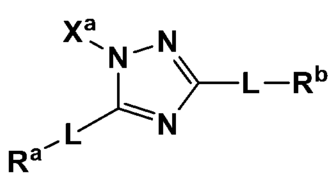

(2)

(wherein, in formula (1), $R^a$ and $R^b$ are each independently a hydrogen atom, carboxyl group, hydroxyl group, thiol group, alkyl group of 1 to 6 carbon atoms which may have a substituent, alkenyl group of 2 to 6 carbon atoms which may have a substituent or aryl group of 6 to 12 carbon atoms which may have a substituent;
$R^a$ and $R^b$ may mutually bond to form a ring of 4 to 12 carbon atoms which may have a substituent;
each L is independently a single bond, carbonyl group, ether bond, ester bond or amide bond;
Z is nitrogen or C-L-$R^c$;
$R^c$ is a hydrogen atom, halogen atom, carboxyl group, hydroxyl group, thiol group, alkyl group of 1 to 6 carbon atoms which may have a substituent, alkenyl group of 2 to 6 carbon atoms which may have a substituent or aryl group of 6 to 12 carbon atoms which may have a substituent;

$X^a$ is a hydrogen atom, lithium atom, sodium atom, alkyl group of 1 to 6 carbon atoms which may have a substituent, aryl group of 6 to 12 carbon atoms which may have a substituent or $-CH_2NR^d{}_2$; and
each $R^d$ is independently an alkyl group of 1 to 10 carbon atoms, alkanol group of 1 to 10 carbon atoms, alkenyl group of 2 to 10 carbon atoms or aryl group of 6 to 12 carbon atoms; and
in formula (2), $R^a$ and $R^b$ are each independently a hydrogen atom, halogen atom, carboxyl group, hydroxyl group, thiol group, alkyl group of 1 to 6 carbon atoms which may have a substituent, alkenyl group of 2 to 6 carbon atoms which may have a substituent or aryl group of 6 to 12 carbon atoms which may have a substituent;
each L is independently a single bond, carbonyl group, ether bond, ester bond or amide bond;
$X^a$ is a hydrogen atom, lithium atom, sodium atom, alkyl group of 1 to 6 carbon atoms which may have a substituent, aryl group of 6 to 12 carbon atoms which may have a substituent or $-CH_2NR^d{}_2$; and
each $R^d$ is independently an alkyl group of 1 to 10 carbon atoms, alkanol group of 1 to 10 carbon atoms, alkenyl group of 2 to 10 carbon atoms or aryl group of 6 to 12 carbon atoms).

**53.** The additive of claim 52, wherein the positive electrode active material contains at least 30 wt% nickel.

**54.** The additive of claim 52, further comprising a nonionic polymer.

**55.** The additive of claim 54, wherein the nonionic polymer is a polymer having pyrrolidone structures or nitrile groups.

**56.** The additive of claim 55, wherein the nonionic polymer is of at least one type selected from the group consisting of polyvinyl pyrrolidone and polyacrylonitrile.

**57.** The additive of claim 52, further comprising a solvent.

**58.** A gelation inhibitor for an electrode slurry containing a positive electrode active material, a binder and a solvent, wherein the gelation inhibitor comprises a heterocycle-containing compound which has a nitrogen-containing five-membered ring and does not include an oxygen atom in the five-membered ring.

**59.** The gelation inhibitor of claim 58, wherein heteroatoms included in the nitrogen-containing five-membered ring are nitrogen atoms only.

**60.** The gelation inhibitor of claim 59, wherein two or three nitrogen atoms are included in the nitrogen-containing five-membered ring.

**61.** The gelation inhibitor of claim 58, wherein the heterocycle-containing compound has a carbonyl structure on the five-membered ring.

**62.** The gelation inhibitor of claim 61, wherein the heterocycle-containing compound is an unfused nitrogen-containing five-membered ring heterocyclic compound.

**63.** The gelation inhibitor of claim 61, wherein the carbonyl structure exhibits proton tautomerism.

**64.** The gelation inhibitor of claim 63, wherein the proton tautomerism is keto-enol tautomerism.

**65.** The gelation inhibitor of claim 58, wherein the heterocycle-containing compound is represented by either of formulas (3) and (4) below

[Chem. 9]

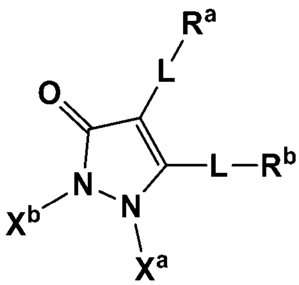

(3)

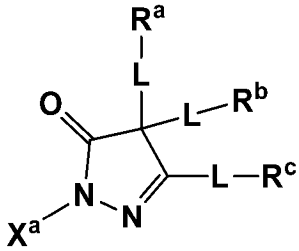

(4)

(wherein $R^a$ to $R^c$ are each independently a hydrogen atom, halogen atom, carboxyl group, hydroxyl group, thiol group, amino group, alkyl group of 1 to 6 carbon atoms which may have a substituent, alkenyl group of 2 to 6 carbon atoms which may have a substituent or aryl group of 6 to 12 carbon atoms which may have a substituent;

$R^a$ and $R^b$ may mutually bond to form a ring of 4 to 12 carbon atoms which may have a substituent;
each L is independently a single bond, carbonyl group, ether bond, ester bond or amide bond;
$X^a$ and $X^b$ are each independently a hydrogen atom, lithium atom, sodium atom, alkyl group of 1 to 6 carbon atoms which may have a substituent, aryl group of 6 to 12 carbon atoms which may have a substituent or $-CH_2NR^d{}_2$; and
each $R^d$ is independently an alkyl group of 1 to 10 carbon atoms, alkanol group of 1 to 10 carbon atoms, alkenyl group of 2 to 10 carbon atoms or aryl group of 6 to 12 carbon atoms).

**66.** The gelation inhibitor of claim 65, wherein the substituents on $R^a$ to $R^c$, $X^a$ and $X^b$ are of at least one type selected from the group consisting of carboxyl, hydroxyl, aldehyde, ester, ketone, amino and phenyl groups, halogen atoms and alkoxysilyl, epoxy, carbonyl chloride and thiol groups.

**67.** The gelation inhibitor of claim 65, wherein the heterocycle-containing compound is represented by formula (4b) below

[Chem. 10]

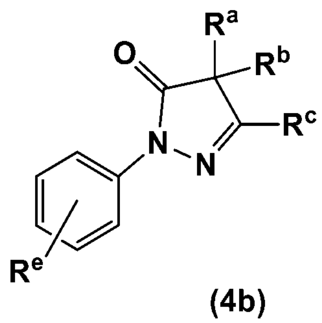

(4b)

(wherein $R^a$ to $R^c$ are the same as above; and
$R^e$ is a hydrogen atom, carboxyl group, hydroxyl group, aldehyde group, ester group, ketone group, amino group, phenyl group, halogen atom, alkoxysilyl group, epoxy group, carbonyl chloride group or thiol group).

**68.** The gelation inhibitor of claim 58, wherein the heterocycle-containing compound is a solid at normal temperature.

**69.** The gelation inhibitor of claim 58, wherein the positive electrode active material contains at least 30 wt% nickel.

**70.** The gelation inhibitor of claim 58, further comprising a nonionic polymer.

**71.** The gelation inhibitor of claim 70, wherein the nonionic polymer is a polymer having pyrrolidone structures or nitrile groups.

**72.** The gelation inhibitor of claim 71, wherein the nonionic polymer is of at least one type selected from the group consisting of polyvinyl pyrrolidone and polyacrylonitrile.

**73.** The gelation inhibitor of claim 58, further comprising a solvent.

**74.** A gelation inhibitor for an electrode slurry containing a positive electrode active material, a binder and a solvent,

wherein the gelation inhibitor comprises a heterocycle-containing compound represented by either of formulas (1) and (2) below

[Chem. 11]

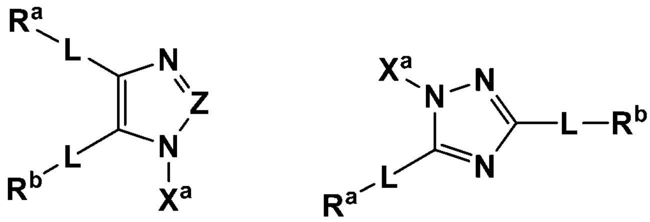

(1) (2)

(wherein, in formula (1), $R^a$ and $R^b$ are each independently a hydrogen atom, carboxyl group, hydroxyl group, thiol group, alkyl group of 1 to 6 carbon atoms which may have a substituent, alkenyl group of 2 to 6 carbon atoms which may have a substituent or aryl group of 6 to 12 carbon atoms which may have a substituent;
$R^a$ and $R^b$ may mutually bond to form a ring of 4 to 12 carbon atoms which may have a substituent;
each L is independently a single bond, carbonyl group, ether bond, ester bond or amide bond;
Z is nitrogen or C-L-$R^c$;
$R^c$ is a hydrogen atom, halogen atom, carboxyl group, hydroxyl group, thiol group, alkyl group of 1 to 6 carbon atoms which may have a substituent, alkenyl group of 2 to 6 carbon atoms which may have a substituent or aryl group of 6 to 12 carbon atoms which may have a substituent;
$X^a$ is a hydrogen atom, lithium atom, sodium atom, alkyl group of 1 to 6 carbon atoms which may have a substituent, aryl group of 6 to 12 carbon atoms which may have a substituent or $-CH_2NR^d{}_2$; and
each $R^d$ is independently an alkyl group of 1 to 10 carbon atoms, alkanol group of 1 to 10 carbon atoms, alkenyl group of 2 to 10 carbon atoms or aryl group of 6 to 12 carbon atoms; and
in formula (2), $R^a$ and $R^b$ are each independently a hydrogen atom, halogen atom, carboxyl group, hydroxyl group, thiol group, alkyl group of 1 to 6 carbon atoms which may have a substituent, alkenyl group of 2 to 6 carbon atoms which may have a substituent or aryl group of 6 to 12 carbon atoms which may have a substituent;
each L is independently a single bond, carbonyl group, ether bond, ester bond or amide bond;
$X^a$ and $X^b$ are each independently a hydrogen atom, lithium atom, sodium atom, alkyl group of 1 to 6 carbon atoms which may have a substituent, aryl group of 6 to 12 carbon atoms which may have a substituent or $-CH_2NR^d{}_2$; and
each $R^d$ is independently an alkyl group of 1 to 10 carbon atoms, alkanol group of 1 to 10 carbon atoms, alkenyl group of 2 to 10 carbon atoms or aryl group of 6 to 12 carbon atoms).

**75.** The gelation inhibitor of claim 74, wherein the substituents on $R^a$ to $R^c$, $X^a$ and $X^b$ are of at least one type selected from the group consisting of carboxyl, hydroxyl, aldehyde, ester, ketone and phenyl groups, halogen atoms and alkoxysilyl, epoxy, carbonyl chloride and thiol groups.

**76.** The gelation inhibitor of claim 74, wherein the heterocycle-containing compound is a heterocycle-containing compound of formula (5) below

[Chem. 12]

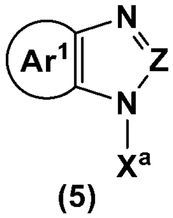

(5)

(wherein $Ar^1$ is an aromatic ring of 4 to 12 carbon atoms which may have a substituent or an aliphatic ring of 4 to 10 carbon atoms which may have a substituent; and Z and $X^a$ are the same as above).

**77.** The gelation inhibitor of claim 76, wherein the heterocycle-containing compound is a heterocycle-containing compound of either of formulas (6) and (7) below

[Chem. 13]

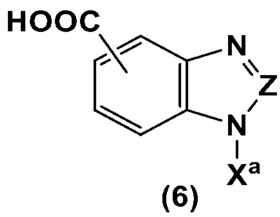

(6)

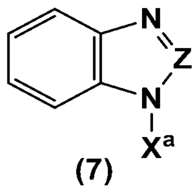

(7)

(wherein Z and $X^a$ are the same as above).

**78.** The gelation inhibitor of claim 74, wherein Z is nitrogen.

**79.** The gelation inhibitor of claim 74, wherein the positive electrode active material contains at least 30 wt% nickel.

**80.** The gelation inhibitor of claim 74, further comprising a nonionic polymer.

**81.** The gelation inhibitor of claim 80, wherein the nonionic polymer is a polymer having pyrrolidone structures or nitrile groups.

**82.** The gelation inhibitor of claim 81, wherein the nonionic polymer is of at least one type selected from the group consisting of polyvinyl pyrrolidone and polyacrylonitrile.

**83.** The gelation inhibitor of claim 74, further comprising a solvent.

**INTERNATIONAL SEARCH REPORT**

International application No. **PCT/JP2024/000558**

**A. CLASSIFICATION OF SUBJECT MATTER**

***H01M 4/139***(2010.01)i; ***H01M 4/62***(2006.01)i
FI: H01M4/139; H01M4/62 Z

According to International Patent Classification (IPC) or to both national classification and IPC

**B. FIELDS SEARCHED**

Minimum documentation searched (classification system followed by classification symbols)

H01M4/139; H01M4/62

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | CN 102044675 A (SHENZHEN CITY BAK BATTERY CO., LTD.) 04 May 2011 (2011-05-04)<br>claim 1, example 10 | 1-2, 9, 17, 32-35, 39<br>11-16 |
| X<br>Y | WO 2021/218803 A1 (SHENZHEN CAPCHEM TECHNOLOGY CO., LTD.) 04 November 2021 (2021-11-04)<br>claim 1, examples 14, 15 | 1-3, 9-10, 32-36, 39-40<br>11-16 |
| Y | JP 2014-056683 A (HITACHI MAXELL LTD.) 27 March 2014 (2014-03-27)<br>claim 1, example 1 | 11-16, 25-30, 48-50, 53-56, 69-72, 79-82 |
| Y | JP 2017-054649 A (KABUSHIKI KAISHA TOYOTA JIDOSHOKKI) 16 March 2017 (2017-03-16)<br>claims 1, 5, example 1 | 11-16, 25-30, 48-50, 53-56, 69-72, 79-82 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 March 2024** | **26 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (July 2022)

INTERNATIONAL SEARCH REPORT

International application No.
PCT/JP2024/000558

C. DOCUMENTS CONSIDERED TO BE RELEVANT

| Category* | Citation of document, with indication, where appropriate, of the relevant passages | Relevant to claim No. |
|---|---|---|
| Y | JP 2012-089411 A (NIPPON ZEON CO.) 10 May 2012 (2012-05-10)<br>claim 1, paragraphs [0005], [0017], [0065], example 1 | 1-13, 15-17, 32-34, 39-51, 58-67 |
| Y | BAILEY, R. A. et al. Complexes of Co(II), Ni(II), and Zn(II) with pyrazolone ligands. Canadian Journal of Chemistry. 1969, 47, pp. 1681-1687<br>table 1 | 1-3, 6, 8-13, 15-17, 32-34, 39-40, 43, 46-51, 58-62, 65, 67 |
| Y | ESFAHANI, M. H. et al. Synthesis and characterization of a series of acylpyrazolone transition metal complexes: Crystal structures and catalytic performance in the epoxidation of cyclooctene, Inorganic Chimica Acta, 2020, 508, 119637<br>fig. 1, 4, table 1 | 1-13, 15-17, 32-34, 39-51, 58-67 |
| X<br><br>Y | JP 2004-127920 A (NEC TOKIN CORP.) 22 April 2004 (2004-04-22)<br>paragraph [0034], example 7 | 18-24, 32-34, 37-38, 52, 57<br>25-30, 53-56 |
| Y | CN 110571475 A (HUAZHONG UNIVERSITY OF SCIENCE AND TECHNOLOGY) 13 December 2019 (2019-12-13)<br>claims 1-3, example 1 | 18, 20-34, 52, 57-60, 68-83 |
| Y | JP 09-218508 A (TORAY INDUSTRIES, INC.) 19 August 1997 (1997-08-19)<br>claims 1-3, example 1 | 18, 20-34, 52, 57-60, 68-83 |

**INTERNATIONAL SEARCH REPORT**
**Information on patent family members**

International application No.
**PCT/JP2024/000558**

| Patent document cited in search report | Publication date (day/month/year) | Patent family member(s) | Publication date (day/month/year) |
|---|---|---|---|
| CN 102044675 A | 04 May 2011 | (Family: none) | |
| WO 2021/218803 A1 | 04 November 2021 | CN 113555600 A | |
| JP 2014-056683 A | 27 March 2014 | (Family: none) | |
| JP 2017-054649 A | 16 March 2017 | (Family: none) | |
| JP 2012-089411 A | 10 May 2012 | (Family: none) | |
| JP 2004-127920 A | 22 April 2004 | US 2004/0029003 A1<br>paragraph [0042], example 7<br>EP 1388906 A2 | |
| CN 110571475 A | 13 December 2019 | (Family: none) | |
| JP 09-218508 A | 19 August 1997 | (Family: none) | |

Form PCT/ISA/210 (patent family annex) (July 2022)

## REFERENCES CITED IN THE DESCRIPTION

*This list of references cited by the applicant is for the reader’s convenience only. It does not form part of the European patent document. Even though great care has been taken in compiling the references, errors or omissions cannot be excluded and the EPO disclaims all liability in this regard.*

### Patent documents cited in the description


- JP 2000090917 A
- JP 2019121471 A
- JP H09306502 A
- JP H1079244 A
- JP 2006286240 A
- WO 2017034001 A1